(19) Europäisches Patentamt
European Patent Office
Office européen des brevets

(11) **EP 2 603 457 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **11761017.0**

(22) Anmeldetag: **28.07.2011**

(51) Int Cl.:
*C01B 39/06* (2006.01)      *C01B 39/32* (2006.01)
*C01B 13/36* (2006.01)

(86) Internationale Anmeldenummer:
**PCT/EP2011/063005**

(87) Internationale Veröffentlichungsnummer:
**WO 2012/019923 (16.02.2012 Gazette 2012/07)**

(54) **HYDROTHERMALE SYNTHESE VON ZEOLITHEN UNTER VERWENDUNG VON MODIFIZIERTEN MISCHOXIDEN**

HYDROTHERMAL SYNTHESIS OF ZEOLITES USING MODIFIED MIXED OXIDES

SYNTHÈSE HYDROTHERMALE DE ZÉOLITES EN UTILISANT D'OXYDES MIXTES MODIFIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2010 DE 102010034005**

(43) Veröffentlichungstag der Anmeldung:
**19.06.2013 Patentblatt 2013/25**

(73) Patentinhaber: **Süd-Chemie IP GmbH & Co. KG 81925 München (DE)**

(72) Erfinder:
• **LARLUS, Olivier**
  **83022 Rosenheim (DE)**
• **CLAUS, Martin**
  **81539 München (DE)**
• **RAKOCZY, Rainer Albert**
  **83024 Rosenheim (DE)**

(74) Vertreter: **Kuba, Stefan et al Clariant Produkte (Deutschland) GmbH IPM / Patent & License Management Arabellastraße 4a 81925 München (DE)**

(56) Entgegenhaltungen:
**EP-A1- 0 109 199    EP-A1- 0 357 252
US-A- 4 657 749     US-A- 4 888 105
US-A- 5 017 353     US-A- 5 330 736
US-A- 5 785 945     US-A- 5 919 722**

## Beschreibung

Diese Erfindung betrifft ein Verfahren zur Herstellung von Aluminiumsilikaten in Form von Zeolith L, sowie die Zwischen- und Endprodukte dieses Verfahrens.

## Hintergrund der Erfindung

Von den zahlreichen Methoden, die der Festkörperchemie zur Verfügung stehen, stellt die Hydrothermalsynthese die am besten geeignete Methode zur Synthese von Zeolithen dar. Die ersten Zeolithsynthesen gelangen 1862 St. Claire Deville (Levyn) und 1882 De Schulten (Analcim) unter hydrothermalen Bedingungen.

Die ersten Zeolithsynthesen, die zu einheitlichen und eindeutig charakterisierten Produkten führten, sind in der Mitte des letzten Jahrhunderts anzusiedeln. So gelang es Milton unter Verwendung von reaktiven Alumosilikatgelen, Zeolithe mit großen Porenöffnungen und entsprechend hohen Adsorptionskapazitäten zu synthetisieren. Etwa zur selben Zeit schufen Barrer und seine Mitarbeiter durch systematische Studien und Methodenverbesserung die Grundlagen für die moderne Zeolithsynthese.

Die Edukte, welche für eine Zeolithsynthese nötig sind, lassen sich in folgende fünf Typen einteilen:

- Quelle der T-Atome, also z.B. eine Silizium- und/oder eine Aluminiumquelle,
- Template,
- Mineralisierer,
- Lösungsmittel, und
- evtl. Impfkristalle.

Die **T-Atome** sind durch folgende Auswahlregeln begrenzt:

- Ionenradienverhältnis $R(T^{n+})/R(O^{2-})$ von 0,223 bis 0,414 (Paulingsches Gesetz),
- die Elektronegativität erlaubt eine ausgeglichene Bindung mit Sauerstoff,
- die Oxidationsstufe liegt zwischen +2 und +5,
- die Löslichkeit verbessert sich durch Polyanionen oder Bildung von $TO^{2-}$-Einheiten,
- das resultierende Gerüst besitzt Ladungsschwerpunkte mit einer Ladung zwischen -1 und 0.

Zur Synthese von Zeolithen kommen in der Regel folgende **Siliziumquellen** zur Anwendung:

- Natronwasserglas (Natriumsilikatlösungen), Alkalimetasilikate und Alkaliwasserglaslösungen,
- Fällungskieselsäuren,
- pyrogene Kieselsäuren, $SiO_2$-reiche Flugaschen und unlösliche Silikate,
- siliziumreiche Tonerden,
- Kieselsole (kolloidal gelöstes $SiO_2$),
- Organosiliziumverbindungen (zumeist Orthokieselsäureester).

Als **Aluminiumquellen** dienen häufig:

- Aluminiumsalze von Mineralsäuren oder organischen Säuren,
- Aluminiumoxide oder -hydroxide und deren Sole (kolloidale Lösungen)
- Aluminiumalkoholate
- elementares Aluminium
- aluminiumreiche Erden, aluminiumreiche Flugaschen

**Template** sind in der Regel ein- oder mehrwertige anorganische oder organische Kationen. Die Template besitzen strukturdirigierende Eigenschaften und stabilisieren die entstehende Zeolithstruktur während der Synthese. Stellvertretend seien einige Beispiele genannt:

- $Sr^{2+}$ bzw. $K^+$ zur Synthese des Zeoliths Ferrierit (FER)
- Tetramethylammoniumkationen zur Synthese von ZSM-5 (MFI),
- $K^+$ [18-Krone-6] zur Synthese der Zeolithe MCM-61 (MSO) oder EMC-2 (EMT),
- [Bis(pentamethylcyclopentadienyl)Co(II)]$^+$-Komplex zur Synthese von Zeolith UTD-1 (DON).

Bei manchen Synthesen kommen allerdings auch ungeladene organische Verbindungen zum Einsatz, wie z.B. Pyrrolidin oder Ethylendiamin bei der Synthese von ZSM-35 (FER).

Als **Mineralisierer** dienen hauptsächlich Hydroxidionen. Eine der wichtigsten Funktionen der Mineralisierer ist das Auflösen der amorphen Alumosilikate während der Synthese. Mineralisierer dienen aber auch dazu, die Löslichkeit der Spezies, welche die T-Atome enthalten, zu steigern. Dies geschieht z.B. durch Erreichen eines idealen pH-Wertes (evtl. zusätzliche Pufferwirkung), Erhöhung der Ionenstärke (fremdioniger Zusatz) oder Komplexierung des T-Atoms. Deshalb werden häufig auch andere lösliche Verbindungen als Mineralisierer eingesetzt, die z.B. komplexbildende Eigenschaften haben.

Als **Lösungsmittel** kommt hauptsächlich Wasser zum Einsatz. Allerdings gibt es auch Synthesen in nichtwässrigen Lösungsmitteln, wie z.B. in Pyridin oder Glycerin. Die Zumischung von Alkoholen zu wässrigen Synthesegelen ist ebenfalls möglich.

Die bildungsmechanistischen Vorstellungen zur Zeolithsynthese können wie folgt beschrieben werden. Synthesegele werden in den allermeisten Fällen in einem Sol-Gel-Prozess präpariert. Im Idealfall geht man von einer Lösung oder mehreren Lösungen, Kolloiden (Solen) oder Suspensionen aus, die durch geeignetes Zusammenmischen in ein amorphes Gel übergehen, welches unter hydrothermalen Bedingungen auskristallisiert. Zum besseren Verständnis kann die Zeolithsynthese in folgende Teilschritte eingeteilt werden:

- Gelpräparation,
- Erreichen von Übersättigung,
- Keimbildung, und
- Kristallwachstum.

Die molare Zusammensetzung des Synthesegels ist der wichtigste Faktor, der die Reaktionsprodukte bestimmt. Folgende Schreibweise wird zumeist verwendet:

$a$ SiO$_2$ : Al$_2$O$_3$ : $b$ M$_x$O : $c$ N$_y$O : $d$ R : $e$ H$_2$O

Dabei stehen M und N z.B. für Alkali- oder Erdalkaliionen und R für ein organisches Templat. Ferner geben die Koeffizienten $a$ bis e die molaren Verhältnisse bezogen auf ein Mol Aluminium(III)oxid an. Während der Gelpräparation werden die einzelnen Ausgangsmischungen zusammengemischt, und gegebenenfalls wird der benötigte pH-Wert eingestellt. Dabei bildet sich ein amorpher Niederschlag (z.B. ein Alumosilikat). Durch Alterung, thermische Behandlung oder Ultraschallbehandlung der Ausgangsmischungen oder der Synthesegele kann Einfluss auf die erhaltenen Produkte ausgeübt werden (z.B. Kristallitgröße).

Im Anschluss an die Niederschlagsbildung ist das Erreichen von Übersättigung wichtig, da diese einen Einfluss auf die Keimbildung ausübt. Für die Übersättigung sind vor allem die Mineralisierer nötig, da sie entweder schon bei der Gelpräparation (in einem Alterungsschritt) oder während der Synthese (vor der eigentlichen Keimbildung) das hochmolekulare System anlösen und kleinere Agglomerate zur Verfügung stellen. Diese können in der wässrigen Phase wieder gelöst werden, evtl. weitere Kristallisationskeime bilden, vorhandene vergrößern oder in vorhandene Kristallite eingebaut werden (R.A. Rakoczy, Hydrothermalsynthese ausgewählter Zeolithe und ihre Charakterisierung durch Adsorption, Dissertation, Universität Stuttgart, 2004).

Der im Rahmen dieser Erfindung relevante Zeolith L (auch als Aluminiumsilikat LTL bezeichnet) weist ein 12-Ring-Poren Zeolithsystem auf, das mit einer hexagonalen Elementarzelle kristallisiert. Zeolith L weist ein eindimensionales Porensystem mit einem Porendurchmesser von etwa 7.1 Å und ein mittleres Silizium-Aluminium-Verhältnis von etwa 6 auf. Aufgrund dieses großen Porendurchmessers eignen sich Zeolithe L besonders gut für katalytische Reaktionen großer Moleküle wie langkettiger aliphatischer Verbindungen (C. Baerlocher, W.M. Meier, D.H. Olson, Atlas of Zeolite Framework Types, fifth revised edition 2001, Elsevier, Amsterdam-London-New York-Oxford-Paris-Shannon-Tokyo, Seite 170). Aluminiumsilikate vom Typ LTL zeigen ein typisches Röntgendiffraktionsmuster mit den folgenden dominanten Reflektionen (Cu Kα1 mit einer Wellenlänge von 1.5406 Å) und typischen d(Å) Werten:

| 2 Theta (°) | d(Å) |
|---|---|
| 5,54 | 15,9 |
| 11,75 | 7,5 |
| 14,69 | 6, 0 |
| 15,20 | 5,8 |
| 19,27 | 4,6 |
| 20,45 | 4,3 |

EP 2 603 457 B1

(fortgesetzt)

| 2 Theta (°) | d(Å) |
| --- | --- |
| 22,64 | 3,9 |
| 24,30 | 3,6 |
| 25,57 | 3,5 |
| 27,09 | 3,3 |
| 27,97 | 3,2 |
| 29,07 | 3,1 |
| 29,64 | 3,0 |
| 30,68 | 2,9 |
| 33,72 | 2,7 |
| 34,18 | 2,6 |
| 35,82 | 2,5 |
| 36,96 | 2,4 |
| 41,00 | 2,2 |
| 48,37 | 1,9 |

Die ersten Erläuterungen der Synthese des Zeolith L finden sich in der US 3,216,789. In einer hierfür typischen Synthese wird ein Aluminiumaquaoxid durch Lösen in Kalilauge in ein Kaliumaluminat überführt. Anschließend wird kolloidales Kieselsol zugemischt. Dabei wird ein Synthesegel mit folgender Zusammensetzung erhalten:
8 $K_2O$ : $Al_2O_3$ : 20 $SiO_2$ : 200 $H_2O$

Das Synthesegel wird in einem verschließbaren Glasbehälter für 196 Stunden auf einer Temperatur von 100 °C gehalten. Dieser Kristallisationsprozess erfolgt ohne Rühren. Nach Separation und Waschen wird der Zeolith L erhalten. Dieses Material zeichnet sich durch ein charakteristisches Röntgenpulverdiffraktogramm aus.

Die Synthese von Zeolith L ist üblicherweise nicht einfach, da häufig kein phasenreiner Zeolith L erhalten wird, sondern zusätzlich Zeolith W (MER) gebildet wird. Der Zeolith W ist ein kleinporiger Zeolith (8-Ring-Poren, Durchmesser unter 5 Ä), der gleichzeitig in dem Synthesegel, das zur Herstellung von Zeolith L bestimmt ist, wächst. Zeolith W zeigt ein Röntgendiffraktionsmuster mit den folgenden dominanten Reflektionen (Cu K$\alpha$1 mit einer Wellenlänge von 1.5406 Ä) und typischen d(Ä) Werten:

| 2 Theta (°) | d(Å) |
| --- | --- |
| 12,4 | 7,1 |
| 12,5 | 7,0 |
| 16,5 | 5,3 |
| 16,6 | 5,3 |
| 17,7 | 5,0 |
| 17,8 | 4,9 |
| 27,3 | 3,2 |
| 27,6 | 3,2 |
| 28,0 | 3,1 |
| 28,2 | 3,1 |
| 30,3 | 2,9 |
| 30,4 | 2,9 |

Die Gegenwart eines Nebenprodukts, wie z.B. Zeolith W, kann die Aktivität des großporigen Zeolith L drastisch verringern.

Daher ist die Herstellung eines hochreinen Zeolith L wünschenswert.

Die US 5,242,675 offenbart eine Synthesemethode, die zu phasenreinem Zeolith L führen soll. Durch Erhitzen in einer Alkalilauge wird Aluminiumhydroxid gelöst. Nach Ergänzen der verdampften Wassermenge wird ein verdünntes kolloidales Kieselsol zugegeben und man erhält unter Rühren ein Synthesegel, das bei 150 °C innerhalb von 72 Stunden auskristallisiert wird. Dabei wird ein mit Teflon ausgekleideter Edelstahldruckbehälter verwendet. Während der Synthese wurde der Kristallisationsansatz nicht gerührt. Kennzeichnend für das Verfahren ist, dass bei der Präparation der Synthesegele durch Zugabe von Metallsalzen (z. B. Barium, Magnesium- oder Calciumhydroxid) zur verdünnten kolloidalen Kieselsollösung die Bildung von Zeolith W als Fremdphase unterdrückt wird.

Die in der US 4,657,749 beschriebene Synthese von Zeolith L umfasst die Kristallisation des Zeolith L aus einem Synthesegemisch aus einer Siliziumquelle, einer Aluminiumquelle und Kalilauge. Die Synthese findet dabei ohne zwischenzeitliche Isolierung eines Zwischenprodukts statt.

Eine weitere Herstellungsmethode von Zeolith L wird in der US 4,530,824 und der EP 0 109 199 A1 beschrieben. Dabei wird in einem ersten Schritt eine "amorphe Verbindung", die aus einem Natriumaluminiumsilikat besteht, hergestellt, gewaschen, mit einer Kaliumhydroxidlösung versetzt und unter hydrothermalen Bedingungen auskristallisiert.

Die oben angegebenen Siliziumquellen unterscheiden sich deutlich im Preis. So ist eine wässrige Lösung von Natriumsilikat, insbesondere eine technische Natronwasserglaslösung deutlich billiger als eine Fällungskieselsäure, eine pyrogene Kieselsäure oder gar ein kolloidales Kieselsol. Ähnliches gilt für mögliche Aluminiumquellen, so ist Aluminiumsulfat deutlich billiger als ein Natriumaluminat oder ein aktiviertes Aluminiumhydroxid.

Allerdings scheidet die Verwendung von billigeren Natriumsilikatlösungen häufig aus, da eine direkte Präparation eines Synthesegels aus einer Natriumsilikatlösung zu einer Zusammensetzung führt, die zu viel Natrium erhält. Deshalb müssen in diesen Fällen teurere Quellen wie Fällungskieselsäuren oder kolloidale Kieselsole verwendet werden.

Bei der kommerziellen Herstellung von Zeolithen und zeolithähnlichen Materialien sind insbesondere die Phasenreinheit des erhaltenen Produkts und die Wirtschaftlichkeit der verwendeten Rezepturen, d.h. die Kosten der verwendeten Rohmaterialien und die erhaltenen Ausbeuten von höchstem Interesse.

Es besteht daher ein Bedarf nach einem verbesserten Verfahren zur Herstellung von Zeolith L und Vorstufen davon. Demzufolge ist es die Aufgabe der Erfindung, ein Herstellungsverfahren von Zeolith L und Vorstufen davon zur Verfügung zu stellen, das unter Verwendung von preiswerteren Edukten durchgeführt werden kann und das insbesondere zur Herstellung eines phasenreinen Zeolith L verwendet werden kann. Die Aufgabe wird gelöst durch die Präparation eines nachträglich modifizierbaren amorphen Aluminiumsilikatpräkursors (Mischhydroxid), welches durch Fällung unter Verwendung von billigen Silizium- und Aluminiumquellen hergestellt werden kann, und aus dem durch weitere Verfahrensschritte über ein Synthesegel ein Zeolith L erhalten werden kann.

## Zusammenfassung der Erfindung

Die Erfindung betrifft ein Verfahren zur Herstellung eines Synthesegels umfassend:

(1) Vermischen einer Lösung 1, einer Lösung 2, und gegebenenfalls mindestens einer weiteren Lösung, mit einer basischen Lösung 3 zum Erhalt eines Niederschlags,

(2) Abtrennen und gegebenenfalls Trocknen des Niederschlags zum Erhalt eines Mischhydroxids, und gegebenenfalls

(3) Lösen oder Suspendieren des Mischhydroxids in einer basischen Lösung 4 zum Erhalt eines Synthesegels,

wobei
die Lösung 1 eine Siliziumquelle und gegebenenfalls eine Titanquelle, eine Germaniumquelle, eine Zinnquelle und/oder eine Phosphorquelle, in Wasser oder einem Wasser-Alkohol-Gemisch umfasst,
die Lösung 2 eine Aluminiumquelle und gegebenenfalls eine Borquelle, eine Galliumquelle, eine Indiumquelle und/oder eine Phosphorquelle, in Wasser oder einem Wasser-Alkohol-Gemisch umfasst, und
die Stoffmengen der in den Lösungen 1 und 2, der/den optionalen weiteren Lösung(en) und der basischen Lösung 3 eingesetzten Verbindungen Gleichung (1) erfüllen:

$$1 < \frac{\sum nBa - \sum nSr}{n_{Al}} \qquad (1)$$

wobei:

$\sum nBa$: die Summe der Stoffmengen der eingesetzten Basen *Ba* mit einem $pK_b < 8$ (vorzugsweise $pK_b < 5$) jeweils multipliziert mit der Anzahl n an Protolysestufen mit einem $pK_B < 8$ bedeutet,

$\sum nSr$: die Summe der Stoffmengen der eingesetzten Säuren *Sr* mit einem $pK_S < 4,5$, jeweils multipliziert mit der Anzahl n an Protolysestufen mit einem $pK_S < 4,5$ bedeutet,

$n_{Al}$: die Summe der Stoffmengen von eingesetztem Aluminium bedeutet.

Die Erfindung betrifft ferner ein Verfahren zur Herstellung von Zeolith L durch hydrothermale Behandlung des gemäß dem erfindungsgemäßen Verfahren erhaltenen Synthesegels.

Des Weiteren betrifft die Erfindung das durch die oben beschriebenen Verfahren erhältliche Synthesegel

**Detaillierte Beschreibung der Erfindung**

Die Erfindung beschreibt ein Verfahren zur Herstellung eines Aluminiumsilikatpräkursors (Mischhydroxid), aus dem durch weitere Verfahrensschritte ein Aluminiumsilikat, insbesondere das Aluminiumsilikat vom Strukturtyp LTL (Zeolith L) erhalten werden kann.

Der erhaltene Präkursor (Mischhydroxid) wird gegebenenfalls gewaschen. Im Anschluss daran kann zusätzlich durch geeigneten Ionenaustausch der Alkaligehalt eingestellt werden. Darüber hinaus besteht die Möglichkeit den Präkursor zu trocknen, was die Lagerung ermöglicht bzw. den Transport erleichtert.

Ein deutlicher Vorteil der Verwendung von modifizierbaren Aluminiumsilikatpräkursoren liegt darin, dass durch entsprechende Wahl der Fällungsbedingungen oder durch entsprechende Wahl der Nachbehandlungsmethoden, die chemischen und physikalischen Eigenschaften dieser Präkursoren so eingestellt werden können, damit die nachfolgende hydrothermale Kristallisation optimal abläuft.

Im Folgenden werden die einzelnen Verfahrensschritte sowie die verwendeten Ausgangsmaterialien bei der Herstellung des Aluminiumsilikatpräkursors detailliert beschrieben.

Zunächst werden eine Lösung 1 und eine Lösung 2 sowie gegebenenfalls mindestens eine weitere Lösung (also eine oder mehrere weitere Lösungen) mit einer basischen Lösung 3 vermischt. Dabei fällt ein Niederschlag aus, welcher durch geeignete Verfahren von der Lösung abgetrennt wird. Das Abtrennen erfolgt dabei üblicherweise durch Filtration oder Zentrifugation, vorzugsweise durch Filtration. Hierdurch wird ein Mischhydroxid erhalten, welches gegebenenfalls gewaschen und getrocknet werden kann.

Die Lösung 1 umfasst eine Siliziumquelle. Ferner kann die Lösung 1 beispielsweise eine Titanquelle, eine Germaniumquelle, eine Zinnquelle und/oder eine Phosphorquelle enthalten. Vorzugsweise umfasst die Lösung 1 eine Siliziumquelle und eine Phosphorquelle, besonders bevorzugt eine Siliziumquelle, eine Titanquelle und eine Phosphorquelle.

Die Lösung 2 umfasst eine Aluminiumquelle. Ferner kann die Lösung 2 beispielsweise eine Borquelle, eine Galliumquelle, eine Indiumquelle und/oder eine Phosphorquelle enthalten. Vorzugsweise umfasst die Lösung 2 eine Aluminiumquelle und eine Phorsphorquelle, besonders bevorzugt eine Aluminiumquelle, eine Galliumquelle und eine Phosphorquelle.

Die optionale, mindestens eine weitere Lösung umfasst insbesondere ein Alkalisalz, ein Erdalkalisalz und/oder ein Ammoniumsalz. Bevorzugt umfasst die mindestens eine weitere Lösung Kaliumcarbonat, Natriumcarbonat, Ammoniumcarbonat, Bariumhydroxid, Magnesiumhydroxid, Calciumhydroxid und/oder Strontiumhydroxid, vorzugsweise Kaliumcarbonat, Natriumcarbonat und/oder Ammoniumcarbonat. Als mindestens eine weitere Lösung können auch mehrere Lösungen verwendet werden, wobei beispielsweise die eine Kaliumcarbonat, die andere Natriumcarbonat, und eine weitere Magnesiumhydroxid enthalten kann. Auch Mischungen verschiedener und gleicher Salze sind dabei möglich.

Die basische Lösung 3 umfasst üblicherweise Kaliumhydroxid, Natriumhydroxid und/oder Ammoniumhydroxid, vorzugsweise Kaliumhydroxid und/oder Natriumhydroxid, insbesondere Kaliumhydroxid.

Für die Herstellung des Mischhydroxids und damit auch für die Herstellung des Synthesegels bzw. des Zeolith L ist es von Vorteil, wenn die Menge verfügbarer Hydroxidionen zur Menge an Aluminiumionen in dem Gemisch aus Lösung 1, Lösung 2, Lösung 3 und der gegebenenfalls mindestens einen weiteren Lösung so eingestellt wird, dass das Stoffmengenverhältnis der verfügbaren Hydroxidionen zu Aluminiumionen größer 1 ist, vorzugsweise sich im Bereich von 1 bis 5, noch bevorzugter im Bereich von 2,5 bis 4,5, insbesondere im Bereich von 3,8 bis 4,2 befindet. Der Ausdruck "Menge verfügbarer Hydroxidionen" bedeutet dabei die Menge an Hydroxidionen, die in diesem Lösungsgemisch vorhanden ist bzw. durch die Anwesenheit von Basen gebildet wird, und die mit $Al^{3+}$-Ionen zu Aluminiumhydroxid, bzw. im Folgenden zu Aluminaten reagiert, die sich in dem Niederschlag wiederfinden. In einem einfachen Fall, in dem die Lösungen 1 bis 3 sowie die gegebenenfalls weitere Lösung als Basen ausschließlich starke einwertige Basen in Form von Alkalihydroxiden enthalten, entspricht die Stoffmenge der verfügbaren Hydroxidionen der Stoffmenge der Alkalihydroxide. Andererseits ist im Fall von zweiwertigen starken Basen wie Calciumhydroxid die Stoffmenge der verfügbaren Hydroxidionen gleich der zweifachen Stoffmenge der eingesetzten Basen, da die zweite Basenkonstante (oder Protolysestufe) $pK_{b2}$=2,43 (von Ca(OH$^+$)$_{aq}$) ist. Bei zweiwertigen mittelstarken Basen wie Na$_2$CO$_3$, bei denen die zweite Basenkonstante $pK_{b2}$ = 4,75 (von HCO$_3^-$) ist, wird hingegen vorzugsweise lediglich die einfache Stoffmenge der eingesetzten Base zur Berechnung der Menge verfügbarer Hydroxidionen berücksichtigt.

Anders ausgedrückt, ist es für die Herstellung des Mischhydroxids und damit auch für die Herstellung des Synthesegels bzw. des Zeolith L vorteilhaft, wenn die Stoffmengen der in den Lösungen 1 und 2, der/den optionalen weiteren Lösung(en) und der basischen Lösung 3 eingesetzten Verbindungen Gleichung (1) erfüllen:

$$1 < \frac{\sum nBa - \sum nSr}{n_{Al}} \qquad (1)$$

wobei:

$\sum nBa$: die Summe der Stoffmengen der eingesetzten Basen $Ba$ mit einem $pK_b$<8 jeweils multipliziert mit der Anzahl n an Protolysestufen mit einem $pK_b$<8 bedeutet,

$\sum nSr$: die Summe der Stoffmengen der eingesetzten Säuren $Sr$ mit einem $pK_S$<4,5, jeweils multipliziert mit der Anzahl n an Protolysestufen mit einem $pK_S$<4,5 bedeutet,

$n_{Al}$: die Summe der Stoffmengen von eingesetztem Aluminium bedeutet.

Vorzugsweise ist $\sum nBa$ die Summe der Stoffmengen der eingesetzten Basen $Ba$ mit einem $pK_b$<5 jeweils multipliziert mit der Anzahl n an Protolysestufen mit einem $pK_B$<5.

Für die Herstellung des Mischhydroxids und damit auch für die Herstellung des Synthesegels bzw. des Zeolith L ist es bevorzugt, wenn die Stoffmengen der in den Lösungen 1 und 2, der/den optionalen weiteren Lösung(en) und der basischen Lösung 3 eingesetzten Verbindungen Gleichung (1a) erfüllen:

$$1 < \frac{\sum nBa - \sum nSr}{n_{Al}} < 5 \qquad (1a),$$

wobei $\sum nBa$, $\sum nSr$ und $n_{Al}$ obige Bedeutungen aufweisen.

Für die Herstellung des Mischhydroxids und damit auch für die Herstellung des Synthesegels bzw. des Zeolith L ist es noch bevorzugter, wenn die Stoffmengen der in den Lösungen 1 und 2, der/den optionalen weiteren Lösung(en) und der basischen Lösung 3 eingesetzten Verbindungen Gleichung (1b) erfüllen:

$$2,5 < \frac{\sum nBa - \sum nSr}{n_{Al}} < 4,5 \qquad (1b),$$

wobei $\sum nBa$, $\sum nSr$ und $n_{Al}$ obige Bedeutungen aufweisen.

Es ist insbesondere bevorzugt, wenn die Stoffmengen der in den Lösungen 1 und 2, der/den optionalen weiteren Lösung(en) und der basischen Lösung 3 eingesetzten Verbindungen Gleichung (1c) erfüllen:

$$3,8 < \frac{\sum nBa - \sum nSr}{n_{Al}} < 4,2 \qquad (1c),$$

wobei $\sum nBa$, $\sum nSr$ und $n_{Al}$ obige Bedeutungen aufweisen.

Durch obige Definition der Reaktionsbedingungen, d.h. über die Menge verfügbarer Hydroxidionen bzw. über Gleichungen (1), (1a), (1b) bzw. (1c) wird erreicht, dass ausreichend basische Bedingungen im Gemisch der Lösungen 1 bis 3 und der optionalen weiteren Lösung(en) herrschen, damit im wesentlichen alle eingesetzten Aluminium- und Siliziumionen als Mischhydroxid ausgefällt werden. Dies wird insbesondere erreicht, wenn am Ende der Reaktion der Lösungen 1 bis 3 und der optionalen weiteren Lösung(en) der pH des Gemisches sich im Bereich von etwa 7 bis 9, insbesondere im Bereich von 7,5 bis 9 befindet.

Die Bedeutung der obigen Formel (1) ist in folgender beispielhafter Darstellung für ein Gemisch der Lösungen Lösungen 1 und 2, der/den optionalen weiteren Lösung(en) und der basischen Lösung 3 mit den jeweiligen Basen bzw. Säuren kurz dargestellt:

| Base/Säure | Stoffmenge [mol] | $nBa$ $pK_b<8$ [mol] | $nBa$ $pK_b<5$ [mol] | $nSr$ $pK_s<4,5$ [mol] | $n_{Al}$ [mol] |
|---|---|---|---|---|---|
| $Na_3PO_4$ | 1 | 2×1 | 1×1 | - | - |
| KOH | 3 | 1×3 | 1x3 | - | - |
| $Na_2CO_3$ | 1 | 2×1 | 1×1 | - | - |
| $NaHSO_4$ | 1,5 | - | - | 1x1,5 | - |
| $AlCl_3$ | 2 | - | - | - | 2 |
| $\sum nBa$ | - | 7 | 5 | - | - |
| $\dfrac{\sum nBa - \sum nSr}{n_{Al}}$ | - | 2,75 | 1,75 | - | - |

Die Lösung 1, die Lösung 2, die optionale (mindestens eine) weitere Lösung und die basische Lösung 3 liegen üblicherweise als wässrige Lösung vor. Gegebenenfalls können die Lösungen unabhängig voneinander auch als Alkohol-Wasser-Gemische vorliegen und gegebenenfalls weitere organische Lösungsmittel enthalten, wobei auch z.B. eine Lösung als wässrige Lösung, eine andere Lösung als Alkohol-Wasser-Gemisch und eine weitere als organisches Lösungsmittel enthaltende wässrige Lösung vorliegen kann. Bevorzugte der in der Lösung 1, der Lösung 2, der optionalen (mindestens einen) weiteren Lösung und der basischen Lösung 3 verwendeten Alkohole sind $C_{1-6}$-Alkohole, wie Methanol, Ethanol, Isopropanol und n-Propanol, insbesondere Ethanol, Isopropanol und n-Propanol. Die Alkohole bzw. die weiteren organischen Lösungsmittel sind dabei, wenn vorhanden, üblicherweise in einem Anteil von bis zu 20 Gew.-%, vorzugsweise in einem Anteil von 0,1 bis 5 Gew.-%, insbesondere von 1 bis 3 Gew.-%, bezogen auf die Gesamtmenge der jeweiligen Lösung enthalten.

Beispiele für die Siliziumquelle sind Natriumsilikat, Kaliumsilikat, Siliziumdioxid, Kieselsäure, wie Fällungskieselsäure oder pyrogene Kieselsäure, und Alkoxysilane, wie Tetra-$C_{1-2}$-Alkoxysilan. Bevorzugte Siliziumquellen sind Natriumsilikat, Kaliumsilikat, Siliziumdioxid, Fällungskieselsäure und/oder pyrogene Kieselsäure, besonders bevorzugt sind Natriumsilikat und/oder Kaliumsilikat.

Beispiele für die Titanquelle sind Titansulfat, Titantetrachlorid und Titandioxid. Bevorzugte Titanquellen sind Titansulfat und Titantetrachlorid, besonders bevorzugt ist Titansulfat.

Beispiele für die Germaniumquelle sind Germaniumchlorid und Germaniumhydroxid. Eine bevorzugte Germaniumquelle ist Germaniumchlorid.

Beispiele für die Zinnquelle sind Zinnchlorid, Zinnnitrat, Zinnsulfat und Zinnhydroxid. Bevorzugte Zinnquellen sind Zinnchlorid, Zinnnitrat und Zinnsulfat, besonders bevorzugt ist Zinnsulfat.

Beispiele für die Phosphorquelle sind Orthophosphorsäure, Dihydrogenmonokaliumphosphat, Monohydrogendikaliumphosphat, Dihydrogenmononatriumphosphat, Monohydrogendinatriumphosphat, Trikaliumphosphat, und Trinatriumphosphat. Bevorzugte Phosphorquellen sind Orthophosphorsäure, Dihydrogenmonokaliumphosphat, Dihydrogenmononatriumphosphat, Trikaliumphosphat und Trinatriumphosphat, besonders bevorzugt sind Trikaliumphosphat und Trinatriumphosphat.

Beispiele für die Aluminiumquelle sind Aluminiumsulfat, Aluminiumnitrat, Aluminiumchlorid, Aluminiumhydroxid, Aluminiumoxid, Aluminiumalkoxid, Natriumaluminat und Kaliumaluminat. Bevorzugte Aluminiumquellen sind Aluminiumsulfat, Aluminiumnitrat, Aluminiumchlorid, Aluminiumhydroxid, Aluminiumoxid, Natriumaluminat und Kaliumaluminat, besonders bevorzugt sind Natriumaluminat, Kaliumaluminat, Aluminiumsulfat und Aluminiumnitrat.

Beispiele für die Borquelle sind Borhydroxid, Bornitrat, Natriumtetraborat und Borsäure. Bevorzugte Borquellen sind Natriumtetraborat und Borhydroxid, besonders bevorzugt ist Borhydroxid.

Beispiele für die Galliumquelle sind Galliumnitrat, Galliumsulfat und Galliumhydroxid. Bevorzugte Galliumquellen sind Galliumnitrat und Galliumsulfat, besonders bevorzugt ist Galliumsulfat.

Beispiele für die Kaliumquelle sind Kaliumhydroxid, Kaliumcarbonat, Kaliumhydrogencarbonat, Kaliumnitrat, Kaliumsulfat, Kaliumchlorid, Kaliumbromid, Trikaliumphosphat, Dihydrogenmonokaliumphosphat und Monohydrogendikaliumphosphat. Bevorzugte Kaliumquellen sind Kaliumhydroxid, Kaliumcarbonat, Kaliumhydrogencarbonat, Kaliumnitrat, Kaliumsulfat, Kaliumchlorid und Kaliumbromid, besonders bevorzugt sind Kaliumhydroxid, Kaliumcarbonat, Kaliumhydrogencarbonat und Kaliumsulfat, insbesondere Kaliumhydroxid.

Beispiele für die Eisenquelle sind Eisennitrat, Eisensulfat und Eisenchlorid. Bevorzugte Eisenquellen sind Eisensulfat und Eisenchlorid, besonders bevorzugt ist Eisensulfat.

Beispiele für die Indiumquelle sind Indiumnitrat und Indiumsulfat, bevorzugt ist Indiumsulfat.

In einer bevorzugten Ausführungsform des erfindungsgemäßen Verfahrens umfasst die Lösung 1 eine Siliziumquelle, insbesondere Natriumsilikat, Kaliumsilikat, Siliziumdioxid und/oder Fällungskieselsäure, und eine Phosphorquelle, die Lösung 2 eine Aluminiumquelle, insbesondere Natriumaluminat, Kaliumaluminat, Aluminiumsulfat und/oder Aluminiumnitrat und die basische Lösung 3 Kaliumhydroxid, und/oder Natriumhydroxid.

In einer weiteren bevorzugten Ausführungsform des erfindungsgemäßen Verfahrens umfasst die Lösung 1 Natriumsilikat, die Lösung 2 Aluminiumsulfat und die basische Lösung 3 Kaliumhydroxid und/oder Natriumhydroxid.

In einer weiteren bevorzugten Ausführungsform des erfindungsgemäßen Verfahrens umfasst die Lösung 1 Natriumsilikat, die Lösung 2 Aluminiumsulfat, und die basische Lösung 3 Natriumaluminat.

In einer anderen bevorzugten Ausführungsform des erfindungsgemäßen Verfahrens umfasst die Lösung 1 Natriumsilikat, die Lösung 2 Schwefelsäure bzw. eine schwefelsaure Lösung, und die basische Lösung 3 Natriumaluminat.

Der durch Vermischen der Lösung 1, der Lösung 2 und der optionalen mindestens einer weiteren Lösung, mit einer basischen Lösung 3 erhaltenen Niederschlag wird üblicherweise durch Filtration von den vermischten Lösungen abgetrennt, um ein Mischhydroxid zu erhalten. Anschließend, gegebenenfalls nach Waschen mit Wasser, kann dieses Mischhydroxid z.B. bei einer Temperatur im Bereich von 80 bis 150°C, vorzugsweise bei einer Temperatur im Bereich von 100 bis 130°C, insbesondere bei einer Temperatur von etwa 120°C getrocknet werden. Das Trocknen ist nicht unbedingt erforderlich, da der feuchte Niederschlag sowohl im feuchten Zustand gelagert als auch eingesetzt werden kann.

Nach Abtrennen, sowohl vor als auch nach dem optionalen Trocknen, kann das Mischhydroxid durch Ionenaustausch in wässriger Lösung z.B. mit $Li^+$, $Na^+$, $K^+$, $Cs^+$, $Rb^+$, $NH_4^+$, $Be^{2+}$, $Mg^{2+}$, $Ca^{2+}$, $Sr^{2+}$ und/oder $Ba^{2+}$, insbesondere mit $K^+$, $NH_4^+$, $Mg^{2+}$, und/oder $Ba^{2+}$, vorzugsweise mit $K^+$ und/oder $NH_4^+$, modifiziert werden.

Das Mischhydroxid kann anschließend durch Lösen oder Suspendieren in einer basischen Lösung 4 zu einem Synthesegel umgesetzt werden. Außerdem eignet sich das Mischhydroxid als Bindemittel, wenn die Aluminiumionen oktaedrisch eingebaut sind, oder zum Kationenaustausch (Calcium-Natrium-Austausch), wenn die Aluminiumionen in tetraedrischer Koordination eingebaut sind.

Die basische Lösung 4 umfasst Kaliumhydroxid und Kaliumcarbonat.

Die basische Lösung 4 liegt üblicherweise als wässrige Lösung vor. Gegebenenfalls kann die basische Lösung 4 als Alkohol-Wasser-Gemisch vorliegen und gegebenenfalls weitere organische Lösungsmittel enthalten. Bevorzugte in der basischen Lösung 4 verwendete Alkohole sind $C_{1-6}$-Alkohole, wie Methanol, Ethanol, Isopropanol und n-Propanol, insbesondere Ethanol, Isopropanol und n-Propanol. Die Alkohole bzw. die weiteren organischen Lösungsmittel sind dabei, wenn vorhanden, üblicherweise in einem Anteil von bis zu 20 Gew.-%, vorzugsweise im Bereich von 0,1 bis 5 Gew.-% bezogen auf die Gesamtmenge der basischen Lösung 4 enthalten.

Das Synthesegel, das mit dem erfindungsgemäßen Verfahren erhältlich ist, kann insbesondere für die Herstellung von Aluminiumsilikaten, vorzugsweise für die Herstellung von Zeolith L (Aluminiumsilikat vom Strukturtyp LTL) verwendet werden. Dazu wird das Synthesegel einer hydrothermalen Behandlung ausgesetzt, wofür man das Synthesegel üblicherweise bei einer definierten Temperatur in einem geschlossenen Autoklaven erhitzt. Das vorhandene Wasser sorgt dabei für einen erhöhten Druck im Innern des Autoklaven.

Synthesegele mit folgenden Stoffmengenverhältnissen haben sich als für die Herstellung von Zeolith L besonders gut geeignet gezeigt:

$(M_2O+NO)/SiO_2 = 0,15 - 1,0$;
$K^+/SiO_2 = 0,20 - 2,0$;
$H_2O/SiO_2 = 5,0 - 30,0$;
$SiO_2/Al_2O_3 = 3,0 - 20,0$,

wobei M ausgewählt ist aus Li, Na, K und $NH_4$, und N ausgewählt ist aus Ba, Ca und Sr.

Insbesondere gut geeignet für die Herstellung von Zeolith L sind Synthesegele mit folgenden Stoffmengenverhältnissen:

$M_2O/SiO_2 = 0,40 - 0,50$;
$K^+/SiO_2 = 0,30 - 1,0$;
$H_2O/SiO_2 = 10,0 - 20,0$;
$SiO_2/Al_2O_3 = 5,0 - 12,0$,

wobei M ausgewählt ist aus Na, K und $NH_4$.

Vorzugsweise liegt das Stoffmengenverhältnis von $SiO_2$ zu $Al_2O_3$ im Bereich von 7,0 bis 10,0.

Das $SiO_2/Al_2O_3$-Verhältnis kann durch die entsprechende Wahl der Konzentration und Menge der Silizium- und Aluminiumquellen in Lösung 1 und Lösung 2 eingestellt werden, da durch dieses Verfahren üblicherweise die Silizium- und Aluminiumionen im wesentlichen quantitativ ausgefällt werden. Das $SiO_2/Al_2O_3$-Verhältnis ändert sich

durch das Abtrennen zum Erhalt des Mischhydroxids nur unwesentlich.

Das $(M_2O+NO)/SiO_2$-Verhältnis lässt sich durch die geeignete Menge an Alkali- und Erdalkaliionen in der Lösung 4, die dem Mischhydroxid zur Bildung des Synthesegels beigegeben wird, einstellen. Zu beachten ist hierbei, dass in dem Mischhydroxid bereits Alkali- und gegebenenfalls Erdalkaliionen enthalten sind, die aus den Lösungen 1 bis 3 sowie aus der/den optionalen Lösung(en) stammen und die dem Ladungsausgleich der vorwiegend tetraedrisch koordinierten und einfach negativ geladenen Al-Tetraedereinheiten in dem Mischhydroxid dienen.

Die Menge der Kationen in dem Mischhydroxid ist damit in etwa so groß, dass die negative Ladung der Al-Tetraedereinheiten ausgeglichen wird. Die darüber hinausgehende Menge der Kationen, die aus den Lösungen 1 bis 3 sowie aus der/den optionalen Lösung(en) stammt, wird mit dem Schritt des Abtrennens und optionalen Waschens zum großen Teil mit dem Filtrat abgetrennt und verworfen und liegt somit nicht in dem Mischhydroxid vor.

In einer bevorzugten Ausführungsform wird das erfindungsgemäße Verfahren unter im wesentlichen erdalkalifreien Bedingungen durchgeführt.

In einer anderen bevorzugten Ausführungsform ist das erfindungsgemäße Mischhydroxid und/oder Synthesegel im wesentlichen erdalkalifrei.

Das $H_2O/SiO_2$-Verhältnis lässt sich durch Zugabe der geeigneten Menge Wasser zu dem Mischhydroxid einstellen.

Das Synthesegel kann man nun durch hydrothermale Behandlung in einen Zeolith L (d.h. ein Aluminiumsilikat vom Strukturtyp LTL) überführen, wofür man das Synthesegel üblicherweise bei einer definierten Temperatur in einem geschlossenen Autoklaven erhitzt.

Das mit dem erfindungsgemäßen Verfahren erhältliche Aluminiumsilikat vom Strukturtyp LTL weist vorzugsweise eine spezifische Oberfläche nach BET von kleiner als 400 $m^2$/g, insbesondere im Bereich von 220 bis 380 $m^2$/g und/oder eine mittlere Partikelgröße $D_{50}$ im Bereich von 30 nm bis 5 $\mu$m, insbesondere von 50 bis 3000 nm auf. Die mittlere Partikelgröße $D_{50}$ bezeichnet dabei einen Wert, bei welchem 50 Vol.-% der Partikel einen Durchmesser aufweisen, welcher größer als der $D_{50}$-Wert ist und 50 Vol.-% der Partikel einen Wert aufweisen, welcher kleiner ist als der $D_{50}$-Wert. Die mittlere Partikelgröße $D_{50}$ lässt sich beispielsweise durch Lasergranulometrie bestimmen (DIN 13320-1).

Die spezifische Oberfläche wird im Rahmen der vorliegenden Erfindung durch Gasadsorption nach Brunauer, Emmett und Teller (BET) gemäß der DIN 66131 von Juli 1993 bestimmt. Dazu wird die Probe insbesondere unter Vakuum bei 350°C dehydratisiert und anschließend die Stickstoffadsorption bei 77K gemessen.

Die mit dem erfindungsgemäßen Verfahren erhältlichen Aluminiumsilikate (Zeolith L) sind für die Adsorption oder Umsetzung von Kohlenwasserstoffen, insbesondere für die Aromatisierung von aliphatischen Kohlenwasserstoffen besonders gut geeignet. Sie zeichnen sich hierbei durch hohe Umsatzraten und/oder Adsorptionsraten aus. Es ist ebenfalls bekannt, dass Zeolith L die Reaktion der Ethylbenzoldisproportionierung katalysieren kann (H.G. Karge et al., J. Weitkamp, H.G. Karge, H. Pfeifer and W. Hölderich (Hrsg.), Zeolite and related Microporous Materials: Studies in Surface Science and Catalysis, Vol. 84,1805-1812, 1994).

Die folgenden Beispiele verdeutlichen das Verfahren zur Herstellung eines erfindungsgemäßen Synthesegels sowie dessen Verwendung zur Herstellung eines Zeolithen bzw. zeolithähnlichen Materials. Wenngleich diese Beispiele spezielle Ausführungsformen der Erfindung beschreiben, dienen diese nur zur Veranschaulichung der Erfindung und sollen nicht als die Erfindung in irgendeiner Weise einschränkend aufgefasst werden. Wie der Fachmann weiß, könne zahlreiche Änderungen daran durchgeführt werden, ohne den Schutzumfang der Erfindung, wie er durch die beigefügten Patentansprüche definiert wird, abzuweichen.

**Allgemeines Herstellungsbeispiel**

In einem Fällungsbehälter mit Rührwerk werden eine Lösung aus Wasser und Alkalihydroxid vorgelegt. Zu dieser Lösung wird bei einer bestimmten Temperatur und einem bestimmten Druck mindestens eine Lösung 1 mit einer Lösung 2 versetzt, wobei es zu der Ausfällung des Rohpräkursors (Mischhydroxid) kommt.

Lösung 1 enthält dabei eine Siliziumquelle, und gegebenenfalls eine Titanquelle, eine Germaniumquelle, eine Zinnquelle und/oder eine Phosphorquelle. Lösung 2 enthält eine Aluminiumquelle, und gegebenenfalls eine Borquelle, eine Galliumquelle, eine Eisenquelle, eine Indiumquelle und/oder eine Phosphorquelle. Darüber hinaus können weitere Lösungen zeitgleich (konzertierte Fällung) oder nacheinander (sequentielle Fällung) zugegeben werden. Dies erlaubt die Verwendung und geeignete Dosierung von gemischten Quellen, wie z.B. Aluminiumsulfat oder Natriumaluminat, jeweils in wässriger Lösung enthalten. Die Zugabe von organischem strukturdirigerenden Agens oder anderen Agentien, die gegebenenfalls die Eigenschaften des Präkursoren beeinflussen, ist ebenfalls möglich. Die erhaltene Rohpräkursorensuspension kann bei einer bestimmter Temperatur und einem bestimmten Druck für einen gewissen Zeitraum einer Alterung unterzogen werden. Dabei kann der Ansatz gerührt werden, dies ist aber nicht unbedingt notwendig.

Im Anschluss wird der ausgefällte Rohpräkursor (Mischhydroxid) durch geeignete Methoden der Fest/Flüssig-Separation (z.B. Filtration) abgetrennt und durch Waschen mit Wasser von anhaftenden Resten der Mutterlauge befreit. An dieser Stelle kann der erhaltene Rohpräkursor direkt verwendet, getrocknet oder durch nachträgliche Behandlung (Ionenaustausch, Imprägnierung etc.) modifiziert werden.

Letztendlich kann der Präkursor (Mischhydroxid) mit weiteren Agentien (T-Quellen, strukturdirigierende Agentien, Mineralisierer, Impfkristalle und/oder Lösungsmittel) versetzt werden. Das erhaltene Synthesegel wird mit üblichen hydrothermalen Methoden zur Kristallisation gebracht.

**Beispiel A - Herstellung des Mischhydroxids**

In einem Vorlagebehälter werden 45,1 kg einer Natronwasserglaslösung (10,4 Gew.-% NaOH und 26,6 Gew.-% $SiO_2$, PQ Corp.; Lösung 1) vorgelegt, und in einem weiteren Vorlagenbehälter werden 31,1 kg einer Aluminiumsulfatlösung (8,1 Gew.-% $Al_2O_3$, Giulini BK; Lösung 2) vorgelegt. In einem 120 $dm^3$ Rührbehälter wird eine Lösung aus 5,02 kg Kaliumhydroxid (86 Gew.-%, MERCK) in 38,9 kg demineralisiertem Wasser bereitgestellt. (Lösung 3). Bei Umgebungsdruck (etwa 1 bar) und einer Temperatur von 25°C werden Lösungen 1 und 2 gleichzeitig unter Rühren mit einem Volumenstrom von 150 bis 500 $cm^3$/min in den Rührbehälter mit der Lösung 3 eingeleitet. Dabei fällt das Mischhydroxid in Form eines Niederschlags aus. Zur Kontrolle des Fällungsverlaufs wird der pH-Wert registriert. Am Ende der Fällung wird ein pH-Wert im Bereich von 7,5 bis 9 erreicht. Im Anschluss wird der Ansatz unter Rühren bei 25 °C und bei Umgebungsdruck (etwa 1 bar) für drei Stunden gealtert. Der Ansatz wird in eine Filterpresse überführt, der feste Anteil wird abgetrennt, gewaschen und anschließend getrocknet (120 °C, 10 h). Die chemische Analyse des erhaltenen Mischhydroxids A (Präkursor) ergibt folgendes Resultat:

| | |
|---|---|
| $SiO_2$-Gehalt: | 61,1 Gew.-% |
| Glühverlust: | 13,3 Gew.-% |
| Si/Al Stoffmengenverhältnis: | 4,00 |
| K/Al Stoffmengenverhältnis: | 0,75 |
| Na/Al Stoffmengenverhältnis: | 0,31 |
| (Na+K)/Al Stoffmengenverhältnis: | 1,06 |

Auf die gleiche Weise wie für Mischhydroxid A beschrieben wurden weitere Mischhydroxide B, C und D hergestellt. Die entsprechenden Zusammensetzungen der verwendeten Lösungen 1 bis 3 und der erhaltenen Mischhydroxide sind in Tabelle 1 aufgeführt. Es ist zu beachten, dass in den Beispielen und in Tabellen 1 und 2 teilweise die Kaliumquellen anhand ihres Ursprungs unterschieden werden. So handelt es sich bei $K^3$ um Kalium des Mischhydroxids, bei $K^1$ um Kalium im Synthesegel, das aus Kaliumhydroxid stammt, bei $K^2$ um Kalium im Synthesegel, das aus Kaliumcarbonat stammt und bei $K^{Gesamt}$ um die Summe der Kaliumspezies im Synthesegel.

**Tabelle 1:** Herstellung der Alumosilikat-Mischhydroxide und deren Endzusammensetzungen

| Beschaffenheit des Reaktanden | Mischhydroxid A | Mischhydroxid B | Mischhydroxid C | Mischhydroxid D |
|---|---|---|---|---|
| (Lösung 1) | | | | |
| Gew.-% $SiO_2$ | 26,6 | 26,6 | 26,6 | 26,6 |
| Gew.-% NaOH | 10,4 | 10,4 | 10,4 | 10,4 |
| Gewicht des Reaktanden (g) | 45100 | 4060,1 | 3834,6 | 76700 |
| (Lösung 2) | | | | |
| Gew.-% $Al_2(SO_4)_3$ | 25,9 | 26,8 | 26,8 | 25,9 |
| Gewicht des Reaktanden (g) | 31100 | 2250,1 | 3010,5 | 54600 |
| (Lösung 3) | | | | |
| Gew.-% KOH | 86 | 86 | 86 | 86 |
| Gewicht des Reaktanden (g) | 5020 | 227,9 | 576,8 | 8500 |
| Wasser (Lösung 3) | | | | |
| Gewicht des Reaktanden (g) | 38900 | 3895,8 | 3034,6 | 64400 |
| Charakterisierung des erhaltenen Mischhydroxids | | | | |
| Gew.-% $SiO_2$ | 61,1 | 68,3 | 59,4 | 24,4 |
| $SiO_2/Al_2O_3$-Molverhältnis | 8,00 | 9,82 | 7,02 | 8,14 |
| $Na_2O/Al_2O_3$-Molverhältnis | 0,31 | 0,41 | 0,33 | 0,29 |

(fortgesetzt)

| Charakterisierung des erhaltenen Mischhydroxids | | | | |
|---|---|---|---|---|
| $K^3_2O/Al_2O_3$-Molverhältnis | 0,75 | 0,64 | 0,71 | 0,70 |
| Glühverlust Gew.-% | 13,3 | 8,6 | 14,1 | 68,1 |

**Beispiel 1 - Herstellung eines Synthesegels und eines Aluminikumsilikats vom Typ LTL (Zeolith L)**

Im Anschluss dient der erhaltene Präkursor für folgende Herstellung eines Synthesegels:

In einem Druckbehälter werden 1,56 kg Kaliumhydroxid (86 Gew.-%, MERCK) und 2,26 kg Kaliumcarbonat (99 Gew.-%, PROLABO) in 19 kg demineralisiertem Wasser gelöst. Dazu werden 7,87 kg des oben beschriebenen Mischhydroxids A (Präkursor) gegeben. Das erhaltene Synthesegel hat folgende molare Zusammensetzung:

$[1,000\ SiO_2 : 0,125\ Al_2O_3 : 0,094\ K_2O : 0,038\ Na_2O] : 0,150\ K_2O : O,200\ K_2CO_3 : 15,000\ H_2O$

und wird für acht Stunden bei 25 °C und Umgebungsdruck gerührt. Anschließend wird der Behälter verschlossen und innerhalb von zwei Stunden unter Rühren auf 130 °C erwärmt. Danach wird das Rührwerk ausgeschaltet und der Ansatz für weitere 30 h bei 130 °C gehalten.

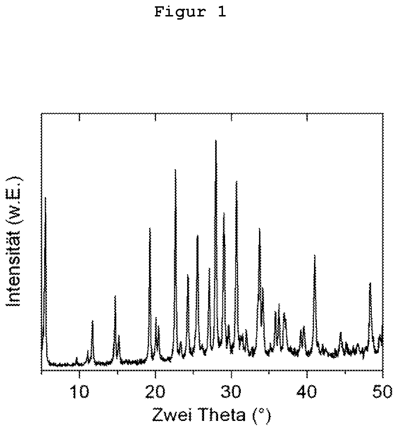

Nach Abkühlen wird das Rührwerk zur Erzeugung einer Suspension eingeschaltet und der Druckbehälter vollständig entleert. Der erhaltene Feststoff wird abfiltriert, gewaschen und bei 120 °C für ca. zehn Stunden getrocknet. Das erhaltene Produkt zeigt ein Röntgenpulverdiffraktogramm (**Figur 1**) mit Reflexlagen, die dem Zeolith L entsprechen.

Die chemische Analyse des erhaltenen Produkts ergibt folgende molare Zusammensetzung:

$1,00\ Al_2O_3 : 1,00\ K_2O : 5,80\ SiO_2$

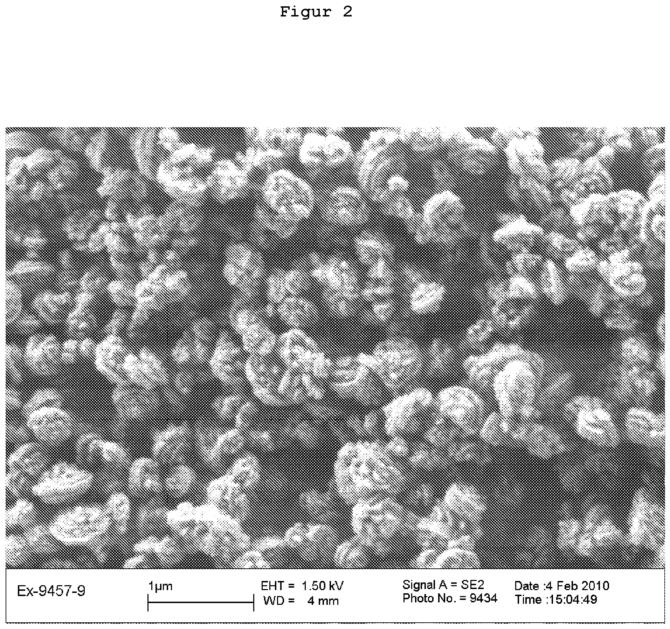

Eine rasterelektronenmikroskopische Untersuchung zeigt (**Figur 2**), dass die erhaltenen Zeolithkristalle eine Abmessung deutlich unter 0,5 μm und eine diskenförmige Morphologie besitzen. Wie aus **Figur 2** ersichtlich, kann auf die flache diskenförmige Grundstruktur noch eine Überwachsung ("intergrowth") auftreten. Die diskenförmigen Grundpartikel haben einen Durchmesser im Bereich von 100 nm bis 1000 nm und eine Höhe von 50 nm bis 300 nm. Das Verhältnis Durchmesser/Höhe liegt zwischen 1 und 3. Für einen Teil der Kristalle wurden der Durchmesser (D) und die Höhe (H) der Zeolithkristalle gemessen und daraus das morphologische D/H-Verhältnis bestimmt. Zusätzlich sind der Durchmesserbereich und der Längenbereich, gemessen an einer Gruppe von wenigstens 20 Teilchen, angegeben.

Auf die gleiche Weise wie für Beispiel 1 beschrieben, wurden weitere Synthesegele bzw. Aluminiumsilikate hergestellt, die in nachfolgenden Beispielen 2 bis 18 detaillierter beschrieben sind. Die Aufheiztemperaturen betrugen für den Bereich von 110°C bis 150°C zwei Stunden, für 90°C etwa 1,5 Stunden und für 170°C etwa 2,5 Stunden. Eine Zusammenstellung der hergestellten Synthesegele ist in Tabelle 2 gegeben. Die in Beispielen 1 bis 18 beschriebenen Synthesen sind Tabelle 3 dargestellt. Tabelle 4 schließlich zeigt die Hauptcharakterisierungsmerkmale der erhaltenen Zeolithe L.

**Herstellungsbeispiele 2 und 3**

Ein Synthesegel wird unter Verwendung des Mischhydroxids B (siehe Tabelle 1) mit einem $SiO_2/Al_2O_3$-Verhältnis (SAV) von etwa 10 hergestellt.

Die basische Lösung 4 wird durch Vermischen zweier Kaliumquellen, Kaliumhydroxid und Kaliumcarbonat, hergestellt, wobei eine molare Zusammensetzung des fertigen Gels von 0,15 $K^1_2O/SiO_2$ und 0,20 $K_2CO_3/SiO_2$ erhalten wird (siehe Tabelle 2, Synthesegel n). Der Kalium-Gesamtgehalt in dem Mischhydroxidgel $K^{Gesamt}_2O/SiO_2$ beträgt 0,41. Die Synthese erfolgt über einen Zeitraum von 24 Stunden bei 170°C (Beispiel 2, Tabelle 3). Das nach der Aufarbeitung nach Beendigung der Synthese gesammelte Material ist laut Röntgenbeugungsdiagramm reiner Zeolith L. Das Si/Al-Verhältnis im Endprodukt von Beispiel 2 beträgt 3,1 (siehe Tabelle 4).

Unter Verwendung derselben molaren Gelzusammensetzung wurde die Synthese bei niedrigeren Temperaturen, 130°C (Beispiel 3, Tabelle 3), bei einer Synthesedauer von 48 Stunden durchgeführt. Durch Röntgenbeugungsanalyse wurde ein reines Material vom Typ Zeolith L identifiziert, was zeigt, dass Zeolith-L auch bei niedrigeren Temperaturen und längeren Synthesezeiten hergestellt werden kann.

**Herstellungsbeispiele 4 bis 6**

Ein Synthesegel wird unter Verwendung des Mischhydroxids A (siehe Tabelle 1) mit einem $SiO_2/Al_2O_3$-Verhältnis (SAV) von etwa 8 besitzt, hergestellt.

Die basische Lösung 4 wird durch Vermischen zweier Kaliumquellen, Kaliumhydroxid und Kaliumcarbonat, hergestellt, wobei eine molare Zusammensetzung des fertigen Gels von 0,15 $K^1_2O/SiO_2$ und 0,20 $K_2CO_3/SiO_2$ erhalten wird (siehe Tabelle 2, Synthesegel 1). Der Kalium-Gesamtgehalt in dem Mischhydroxidgel $K^{Gesamt}_2O/SiO_2$ beträgt 0,44.

Die Synthese erfolgt über einen Zeitraum von 15 Stunden bei 150°C (Beispiel 4, Tabelle 3). Das nach der Aufarbeitung nach Beendigung der Synthese gesammelte Material ist laut Röntgenbeugungsdiagramm reiner Zeolith L.

Unter Verwendung derselben molaren Gelzusammensetzung konnte die Synthese bei niedrigeren Temperaturen, 130°C (Beispiel 5, Tabelle 3) und 110°C (Beispiel 6, Tabelle 3), bei einer Synthesedauer von 30 bzw. 64 Stunden durchgeführt werden. In beiden Fällen wurden durch Röntgenbeugungsanalyse reine Materialien vom Typ Zeolith L identifiziert, und es wurden keine Peaks nachgewiesen, die Material vom Typ Zeolith W entsprechen. Diese Ergebnisse zeigen, dass die Verringerung des SAV im Gel von 10 auf 8 bei konstant bleibender chemischer Zusammensetzung zur Bildung von reinen Zeolith-L-Produkten bei kürzerer Synthesedauer und/oder bei niedrigerer Synthesetemperatur führt.

Das Si/Al-Verhältnis der in den Beispielen 4 bis 6 erhaltenen Endprodukte beträgt 2,9 (siehe Tabelle 4), was dem Verhältnis der Produkte, die mit einem SAV von 10 im Mischhydroxidgel erhalten wurden (Beispiele 1 bis 3), sehr ähnlich ist.

**Herstellungsbeispiel 7**

Ein Synthesegel wird unter Verwendung des Mischhydroxids D (siehe Tabelle 1) mit einem $SiO_2/Al_2O_3$-Verhältnis (SAV) von etwa 8,14 hergestellt. Das SAV des Mischhydroxids D ist mit dem des Mischhydroxids A identisch, jedoch wurde das Mischhydroxid D keinem Trockenschritt am Ende der Filtration unterworfen und enthält daher einen höheren Wassergehalt. Der Einfluss der Wassermenge in dem Mischhydroxid auf die Beschaffenheit der kristallinen Phase wurde untersucht.

Die basische Lösung 4 wird durch Vermischen zweier Kaliumquellen, Kaliumhydroxid und Kaliumcarbonat, hergestellt, wobei eine molare Zusammensetzung des fertigen Gels von 0,15 $K^1_2O/SiO_2$ und 0,20 $K_2CO_3/SiO_2$ erhalten wird (siehe Tabelle 2, Synthesegel m). Der Kalium-Gesamtgehalt in dem Mischhydroxidgel $K^{Gesamt}_2O/SiO_2$ beträgt 0,44.

Die Synthese erfolgt über einen Zeitraum von 30 Stunden bei 130°C (Beispiel 7, Tabelle 3). Das nach der Aufarbeitung nach Beendigung der Synthese gesammelte Material ist laut Röntgenbeugungsdiagramm (siehe Röntgenbeugungsdiagramm) reiner Zeolith L; Spuren einer Zeolith-W-Phase wurden nicht beobachtet. Dies zeigt, dass, wenn mit einer konstanten molaren Gelzusammensetzung und bei einer konstanten Synthesedauer und -temperatur gearbeitet wird, der Wassergehalt in dem Mischhydroxid keinen Einfluss auf die Eigenschaften des Zeolith-L-Endprodukts hat. Daher kann anstelle eines trockenen Filterkuchens genauso gut auch ein nasser Filterkuchen verwendet werden.

**Beispiel 8**

Ein Synthesegel wird unter Verwendung des Mischhydroxids C (siehe Tabelle 1) mit einem niedrigen $SiO_2/Al_2O_3$-Verhältnis (SAV) von etwa 7 hergestellt.

Die basische Lösung 4 wird durch Vermischen zweier Kaliumquellen, Kaliumhydroxid und Kaliumcarbonat, hergestellt, wobei eine molare Zusammensetzung des fertigen Gels von 0,15 $K^1_2O/SiO_2$ und 0,20 $K_2CO_3/SiO_2$ erhalten wird (siehe Tabelle 2, Synthesegel k). Der Kalium-Gesamtgehalt in dem Mischhydroxidgel $K^{Gesamt}_2O/SiO_2$ beträgt 0,45.

Die Synthese erfolgt über einen Zeitraum von 24 Stunden bei 130°C (Beispiel 8, Tabelle 3). Das nach der Aufarbeitung nach Beendigung der Synthese gesammelte Material ist laut Röntgenbeugungsdiagramm reiner Zeolith L. Dieses Beispiel zeigt, dass unter diesen Synthesebedingungen reine Zeolith-L-Produkte durch Erniedrigen des SAV im Mischhydroxidgel bis auf Werte von 7 synthetisiert werden können. Im Gegensatz zu den mit einem SAV von 10 (Beispiel 3) und 8 (Synthese 5) durchgeführten Synthesen ist das Si/Al-Molverhältnis im Endprodukt jedoch wesentlich niedriger und liegt nahe bei 2,4.

**Beispiele 9 bis 11 (Vergleichsbeispiele)**

Synthesegele, die nur Kaliumhydroxid als Kaliumquelle enthalten, wurden erzeugt. Das SAV in den Synthesegelen wurde durch Änderung der Beschaffenheit des verwendeten Mischhydroxids variiert und betrug 9,82 (Tabelle 3, Beispiel 9, Mischhydroxid C), 8,00 (Tabelle 3, Beispiel 10, Mischhydroxid A) und 7,02 (Tabelle 3, Beispiel 11, Mischhydroxid B). In allen Fällen wird eine molare Zusammensetzung des fertigen Gels von 0,15 $K^1_2O/SiO_2$ in der basischen Lösung 4 erhalten, und der Kalium-Gesamtgehalt in dem Mischhydroxidgel $K^{Gesamt}_2O/SiO_2$ liegt im Bereich von 0,21-0,25. Die Röntgenbeugungsdiagramme der gesammelten Materialien weisen Peaks auf, die einem Material vom Typ Zeolith L entsprechen, sowie deutliche Spuren von Zeolith-W-Nebenprodukt, ersichtlich aus den typischen $2\theta$XRD-Reflektionen von 12,4°, 16,5°, 17,8, 28,1 und 30.4°.

Diese Ergebnisse legen nahe, dass der Kaliumgehalt im Gel eine Rolle bei der Bildung von reinem Zelith-L-Produkt spielt; ein zu geringer Kaliumgehalt führt zur Bildung eines Nebenprodukts, wie z.B. von Zeolith W.

**Beispiele 12 bis 14**

Synthesegele, die Kaliumhydroxid in einem niedrigeren Gehalt und eine zweite Kaliumquelle (Kaliumcarbonat) enthalten, wurden erzeugt. Bei Verwendung dieser Gele wurde der Kalium-Gesamtgehalt auf hohem Niveau gehalten. In allen Fällen wird eine molare Zusammensetzung des fertigen Gels von $0{,}10\ K^1_2O/SiO_2$ und $0{,}20\ K_2CO_3/SiO_2$ (siehe Tabelle 2) in der basischen Lösung 4 erhalten, und der Kalium-Gesamtgehalt in dem Mischhydroxidgel $K^{Gesamt}_2O/SiO_2$ liegt im Bereich von 0,36-0,40. Das SAV in den Synthesegelen wurde durch Änderung der Beschaffenheit des verwendeten Mischhydroxids variiert und betrug 9,82 (Tabelle 3, Beispiel 14, Mischhydroxid B), 8,00 (Tabelle 3, Beispiel 13, Mischhydroxid A) und 7,02 (Tabelle 3, Beispiel 12, Mischhydroxid C). Ungeachtet der SAV in den ursprünglichen Synthesegelen, weisen die Röntgenbeugungsdiagramme der gesammelten Materialien Peaks auf, die einem Material vom Typ Zeolith L entsprechen, sowie ein breites Signal (Untergrund), das auf die Gegenwart von amorphen Stoffen im Produkt schließen lässt. Keine Anzeichen auf ein Zeolith-W-Nebenprodukt wurden entdeckt. Diese Ergebnisse zeigen, dass ein geringer alkalisches $K^1_2O/SiO_2$ im Mischhydroxidgel, gekoppelt mit einem hohen Kalium-Gesamtgehalt $K^{Gesamt}_2O/SiO_2$, die Kinetik der Kristallisation beeinflusst, nicht jedoch die Beschaffenheit der kristallinen Phase.

**Beispiel 15 (Vergleichsbeispiel)**

Synthesegele, die Kaliumhydroxid in einem niedrigeren Gehalt und einen niedrigeren Gehalt an der zweiten Kaliumquelle (Kaliumcarbonat) enthalten, wurden erzeugt. In allen Fällen wird eine molare Zusammensetzung des fertigen Gels von $0{,}10\ K^1_2O/SiO_2$ und $0{,}10\ K_2CO_3/SiO_2$ (siehe Tabelle 2) in der basischen Lösung 4 erhalten, und der Kalium-Gesamtgehalt in dem Mischhydroxidgel $K^{Gesamt}_2O/SiO_2$ beträgt 0,26. Das SAV in den Synthesegelen betrug 9,82 (Tabelle 3, Beispiel 15, Mischhydroxid B).

Das Röntgenbeugungsdiagramm des gesammelten Materials weist Peaks auf, die einer Mischung aus Material vom Typ Zeolith L mit Spuren von Zeolith-W-Nebenprodukt sowie einem deutlichen Rest an amorphen Stoffen im Produkt entsprechen. Dieses Ergebnis zeigt, dass ein geringer alkalisches $K^1_2O/SiO_2$ im Mischhydroxidgel, gekoppelt mit einem niedrigen Kalium-Gesamtgehalt $K^{Gesamt}_2O/SiO_2$, die Nukleierung sowie die Kinetik der Kristallisation des Gels beeinflusst.

**Beispiel 16 (Vergleichsbeispiel)**

Ein Synthesegel, das Kaliumhydroxid in einem niedrigeren Gehalt und einen niedrigeren Gehalt an der zweiten Kaliumquelle (Kaliumcarbonat) enthält, wurde erzeugt. Die molare Zusammensetzung des fertigen Gels beträgt $0{,}10\ K^1_2O/SiO_2$ und $0{,}05\ K_2CO_3/SiO_2$ (siehe Tabelle 2, Synthesegel b) in der basischen Lösung 4, und der Kalium-Gesamtgehalt in dem Mischhydroxidgel $K^{Gesamt}_2O/SiO_2$ beträgt 0,21. Das SAV in den Synthesegelen betrug 9,82 (Tabelle 3, Beispiel 16, Mischhydroxid B). Das Röntgenbeugungsdiagramm des gesammelten Materials zeigt, dass das Endmaterial komplett amorph ist. Dieses Ergebnis zeigt, dass ein geringer alkalisches $K^1_2O/SiO_2$ im Mischhydroxidgel, gekoppelt mit einem zu geringen Kalium-Gesamtgehalt $K^{Gesamt}_2O/SiO_2$, nicht länger zur Bildung von Zeolith L führt.

**Beispiel 17 (Vergleichsbeispiel)**

Ein Synthesegel, das einen niedrigen Kaliumhydroxidgehalt sowie einen niedrigen Gehalt an der zweiten Kaliumquelle (Kaliumcarbonat) enthält, wurde erzeugt. Die molare Zusammensetzung des fertigen Gels beträgt $0{,}05\ K^1_2O/SiO_2$ und $0{,}30\ K_2CO_3/SiO_2$ (siehe Tabelle 2, Synthesegel a) in der basischen Lösung 4, und der Kalium-Gesamtgehalt in dem Mischhydroxidgel $K^{Gesamt}_2O/SiO_2$ beträgt 0,44. Das SAV in den Synthesegelen betrug 8,0 (Tabelle 1, Mischhydroxid A).

Das Röntgenbeugungsdiagramm des gesammelten Materials zeigt, dass das Endmaterial komplett amorph ist. Dieses Ergebnis zeigt, dass, obwohl der Kalium-Gesamtgehalt $K^{Gesamt}_2O/SiO_2$ ausreichend hoch ist, ein zu gering alkalisches $K^1_2O/SiO_2$ im Mischhydroxidgel nicht zur Bildung von Zeolith L führt.

**Beispiel 18 (Vergleichsbeispiel)**

Ein Synthesegel, das einen hohen Kaliumhydroxidgehalt und keine zweite Kaliumquelle enthält, wurde erzeugt. Die molare Zusammensetzung des fertigen Gels von $0{,}30\ K^1_2O/SiO_2$ und $0{,}00\ K_2CO_3/SiO_2$ (siehe Tabelle 2, Synthesegel o) in der basischen Lösung 4 wird erhalten, und der Kalium-Gesamtgehalt in dem Mischhydroxidgel $K^{Gesamt}_2O/SiO_2$ beträgt 0,36. Das SAV in den Synthesegelen betrug 9,82 (Tabelle 1, Mischhydroxid B). Das Röntgenbeugungsdiagramm des gesammelten Produkts weist typische Zeolith-L-Peaks mit schwacher Intensität auf, was zeigt, dass das Endmaterial eine große Menge an amorphem Produkt sowie etwas Zeolith L enthält. Dieses Ergebnis zeigt, dass, obwohl der Kalium-Gesamtgehalt $K^{Gesamt}_2O/SiO_2$ ausreichend hoch ist, ein zu stark alkalisches $K^1_2O/SiO_2$ im Mischhydroxidgel nicht zur Bildung eines hochkristallinen Zeolith L führt.

Alle diese Beispiele zeigen deutlich, dass ein optimal alkalisches $K^1_2O/SiO_2$ in dem Mischhydroxidgel vorliegt (im Bereich von 0,10 bis 0,15), gekoppelt mit einem optimalen Kalium-Gesamtgehalt $K^{Gesamt}_2O/SiO_2$ im Mischhydroxidgel (im Bereich von 0,35 bis 0,50).

Tabelle 2: Molare Gelzusammensetzung der mit Hilfe der Mischhydroxide hergestellten Synthesegele

| Synthesegel | Art des Mischhydroxids | Gewicht der Reaktanden (g) | | | | Molare Zusammensetzung des Mischoxids | | | Molare Gelzusammensetzung in Lösung 4 | | | Gesamte molare Gelzusammensetzung | | | | |
|---|---|---|---|---|---|---|---|---|---|---|---|---|---|---|---|---|
| | | Mischhydroxid | Lösung 4 | | | $SiO_2$ /$Al_2O_3$ | $K^3 2O$ /$SiO_2$ | $Na_2O$ /$SiO_2$ | $K^1_2O$ /$SiO_2$ | $K^2_2CO_3$ /$SiO_2$ | $H_2O$ /$SiO_2$ | $SiO_2$ /$Al_2O_3$ | $K^1_2O$ /$SiO_2$ | $Na_2O$/ $SiO_2$ | $H_2O$/ $SiO_2$ | $K^{Gesamt}_2O$ /$SiO_2$ |
| | | | $H_2O$ | $K^1OH$ 86 Gew.-% | $K^2_2CO_3$ 99 Gew.-% | | | | | | | | | | | |
| a | A | 98,4 | 255,7 | 6,6 | 42,0 | 8,00 | 0,09 | 0,04 | 0,05 | 0,30 | 15,00 | 8,00 | 0,05 | 0,04 | 15,00 | 0,44 |
| b | B | 87,9 | 260,6 | 13,2 | 7,2 | 9,82 | 0,06 | 0,04 | 0,10 | 0,05 | 15,00 | 9,82 | 0,10 | 0,04 | 15,00 | 0,21 |
| c | B | 88,0 | 260,6 | 13,1 | 14,1 | 9,82 | 0,06 | 0,04 | 0,10 | 0,10 | 15,00 | 9,82 | 0,10 | 0,04 | 15,00 | 0,26 |
| d | C | 101,6 | 253,7 | 13,1 | 27,8 | 7,02 | 0,10 | 0,05 | 0,10 | 0,20 | 15,00 | 7,02 | 0,10 | 0,05 | 15,00 | 0,40 |
| e | A | 98,5 | 254,9 | 13,2 | 27,8 | 8,00 | 0,09 | 0,04 | 0,10 | 0,20 | 15,00 | 8,00 | 0,10 | 0,04 | 15,00 | 0,39 |
| f | B | 69,7 | 208,5 | 10,5 | 22,3 | 9,82 | 0,06 | 0,04 | 0,10 | 0,20 | 15,00 | 9,82 | 0,10 | 0,04 | 15,00 | 0,36 |
| h | C | 101,5 | 252,8 | 19,7 | 0,0 | 7,02 | 0,10 | 0,05 | 0,15 | 0,00 | 15,00 | 7,02 | 0,15 | 0,05 | 15,00 | 0,25 |
| i | A | 78,3 | 203,6 | 15,7 | 0,0 | 8,00 | 0,09 | 0,04 | 0,15 | 0,00 | 15,00 | 8,00 | 0,15 | 0,04 | 15,00 | 0,24 |
| j | B | 87,3 | 260,1 | 19,7 | 0, 0 | 9,82 | 0,06 | 0,04 | 0,15 | 0,00 | 15,00 | 9,82 | 0,15 | 0,04 | 15,00 | 0,21 |
| k | C | 126,8 | 316,2 | 24,5 | 34,8 | 7,02 | 0,10 | 0,05 | 0,15 | 0,20 | 15,00 | 7,02 | 0,15 | 0,05 | 15,00 | 0,45 |
| l | A | 7870,0 | 19011,2 | 1560,0 | 2260,0 | 8,00 | 0,09 | 0,04 | 0,15 | 0,20 | 15,00 | 8,00 | 0,15 | 0,04 | 15,00 | 0,44 |
| m | D | 24600,0 | 8903,3 | 1952,1 | 2793,3 | 8,14 | 0,09 | 0,04 | 0,15 | 0,20 | 4,95 | 8,14 | 0,15 | 0,04 | 15,00 | 0,44 |
| n | B | 87,2 | 259,8 | 19,5 | 27,9 | 9,82 | 0,06 | 0,04 | 0,15 | 0,20 | 15,00 | 9,82 | 0,15 | 0,04 | 15,00 | 0,41 |
| o | B | 87,7 | 257,2 | 39,2 | 0,0 | 9,82 | 0,06 | 0,04 | 0,30 | 0, 00 | 15,00 | 9,82 | 0,30 | 0,04 | 15,00 | 0,36 |

Tabelle 3: Synthesen, durchgeführt durch Verwendung der verschiedenen Synthesegele unter verschiedenen Synthesebedingungen

| Beispiel | Synthesegel | T(°C) | Zeit (h) | Ergebnis |
|---|---|---|---|---|
| 1 | n | 150 | 30 | Zeolith L |
| 2 | n | 170 | 24 | Zeolith L |
| 3 | n | 130 | 48 | Zeolith L |
| 4 | l | 150 | 15 | Zeolith L |
| 5 | l | 130 | 30 | Zeolith L |
| 6 | l | 110 | 64 | Zeolith L |
| 7 | m | 130 | 30 | Zeolith L |
| 8 | k | 130 | 24 | Zeolith L |
| 9 | h | 130 | 30 | Zeolith L + Zeolith W |
| 10 | i | 130 | 30 | Zeolith L + Zeolith W |
| 11 | j | 170 | 48 | Zeolith L + Zeolith W |
| 12 | d | 130 | 24 | Zeolith L + amorph |
| 13 | e | 130 | 72 | Zeolith L + amorph |
| 14 | f | 170 | 24 | Zeolith L + amorph |
| 15 | c | 170 | 24 | Zeolith W + Zeolith L + amorph |
| 16 | b | 170 | 24 | amorph |
| 17 | a | 130 | 72 | amorph |
| 18 | o | 90 | 96 | amorph + Zeolith L |

Tabelle 4: Hauptcharakterisierungsmerkmale der erhaltenen Zeolithe L

| Beispiel | H($\mu$m) | D($\mu$m) | D/H-Verhältnis | BET (m$^2$/g) | Si/Al | K/Al |
|---|---|---|---|---|---|---|
| 1 | 0,05-0,30 | 0,10-1,00 | 1,00-3,00 | - | 2,90 | 1,00 |
| 2 | 0,60-1,00 | 1,00-2,00 | 1,00-1,50 | 320 | 3,10 | 0,99 |
| 4 | 0,30-0,50 | 0,50-1,00 | 1,50-2,00 | 365 | 2,90 | 0,99 |
| 5 | 0,05-0,50 | 0,20-0,70 | 1,50-3,00 | 380 | 2,90 | 0,99 |
| 6 | 0,05-0,30 | 0,20-0,70 | 2,00-3,00 | 370 | 2,90 | 0,99 |
| 8 | - | - | - | 320 | 2,40 | 0,99 |

**Patentansprüche**

1.  Verfahren zur Herstellung eines Synthesegels umfassend:

    (1) Vermischen einer Lösung 1, einer Lösung 2, und gegebenenfalls mindestens einer weiteren Lösung, mit einer basischen Lösung 3 zum Erhalt eines Niederschlags,
    (2) Abtrennen des Niederschlags zum Erhalt eines Mischhydroxids, und gegebenenfalls Waschen und Trocknen des Mischhydroxids, und
    (3) Lösen oder Suspendieren des Mischhydroxids in einer basischen Lösung 4 zum Erhalt eines Synthesegels,

    wobei
    die Lösung 1 eine Siliziumquelle und gegebenenfalls eine Titanquelle, eine Germaniumquelle, eine Zinnquelle und/oder eine Phosphorquelle, in Wasser oder einem Wasser-Alkohol-Gemisch umfasst,
    die Lösung 2 eine Aluminiumquelle und gegebenenfalls eine Borquelle, eine Galliumquelle, eine Indiumquelle und/oder eine Phosphorquelle, in Wasser oder einem Wasser-Alkohol-Gemisch umfasst,
    die Stoffmengen der in den Lösungen 1 und 2, der/den optionalen weiteren Lösung(en) und der basischen Lösung 3 eingesetzten Verbindungen Gleichung (1) erfüllen:

$$1 < \frac{\sum nBa - \sum nSr}{n_{Al}} \qquad (1)$$

wobei:

$\sum nBa$: die Summe der Stoffmengen der eingesetzten Basen *Ba* mit einem $pK_B<8$ jeweils multipliziert mit der Anzahl *n* an Protolysestufen mit einem $pK_B<8$ bedeutet,

$\sum nSr$: die Summe der Stoffmengen der eingesetzten Säuren *Sr* mit einem $pK_S<4{,}5$, jeweils multipliziert mit der Anzahl *n* an Protolysestufen mit einem $pK_S<4{,}5$ bedeutet,

$n_{Al}$: die Summe der Stoffmengen von eingesetztem Aluminium bedeutet,

und die basische Lösung 4 Kaliumhydroxid und Kaliumcarbonat, gelöst in Wasser oder einem Wasser-Alkohol-Gemisch, umfasst, und in der die Stoffmengen an Kaliumhydroxid und Kaliumcarbonat so gewählt werden, dass das Stoffmengenverhältnis von $K^1_2O$ zu $SiO_2$ im Synthesegel im Bereich von 0,10 bis 0,15 liegt und das Stoffmengenverhältnis von $K^{Gesamt}_2O$ zu $SiO_2$ im Synthesegel im Bereich von 0,35 bis 0,50 liegt, wobei $K^1$ Kalium im Synthesegel ist, das aus Kaliumhydroxid in Lösung 4 stammt, und $K^{Gesamt}$ die Summe der Kaliumspezies im Synthesegel ist.

2. Verfahren gemäß Anspruch 1, wobei $\sum nBa$ die Summe der Stoffmengen der eingesetzten Basen *Ba* mit einem $pK_B<5$ jeweils multipliziert mit der Anzahl n an Protolysestufen mit einem $pK_B<5$ bedeutet.

3. Verfahren gemäß Anspruch 1 oder 2, wobei die Stoffmengen der in den Lösungen 1 und 2, der/den optionalen weiteren Lösung(en) und der basischen Lösung 3 eingesetzten Verbindungen Gleichung (1a) erfüllen:

$$1 < \frac{\sum nBa - \sum nSr}{n_{Al}} < 5 \qquad (1a).$$

4. Verfahren gemäß Anspruch 1, 2 oder 3, wobei die Lösung 1 eine Siliziumquelle und eine Phosphorquelle, vorzugsweise eine Siliziumquelle, eine Titanquelle und eine Phosphorquelle umfasst, und/oder wobei die Lösung 2 eine Aluminiumquelle und eine Phosphorquelle, vorzugsweise eine Aluminiumquelle, eine Galliumquelle und eine Phosphorquelle umfasst.

5. Verfahren gemäß einem der Ansprüche 1 bis 4, wobei
die Siliziumquelle mindestens ein Mitglied ist ausgewählt aus Natriumsilikat, Kaliumsilikat, Siliziumdioxid, Kieselsäure, wie Fällungskieselsäure oder pyrogene Kieselsäure, und einem Alkoxysilan, wie Tetra-$C_{1-2}$-Alkoxysilan, insbesondere ausgewählt ist aus Natriumsilikat, Kaliumsilikat, Siliziumdioxid, Fällungskieselsäure und pyrogener Kieselsäure, vorzugsweise ausgewählt ist aus Natriumsilikat und Kaliumsilikat,
die Titanquelle mindestens ein Mitglied ist ausgewählt aus Titansulfat, Titantetrachlorid und Titandioxid, insbesondere ausgewählt aus Titansulfat und Titantetrachlorid, vorzugsweise ausgewählt ist aus Titansulfat,
die Germaniumquelle mindestens ein Mitglied ist ausgewählt aus Germaniumchlorid und Germaniumhydroxid, insbesondere ausgewählt ist aus Germaniumchlorid,
die Zinnquelle mindestens ein Mitglied ist ausgewählt aus Zinnchlorid, Zinnnitrat, Zinnsulfat und Zinnhydroxid, insbesondere ausgewählt ist aus Zinnchlorid, Zinnnitrat und Zinnsulfat, vorzugsweise ausgewählt ist aus Zinnsulfat,
die Phosphorquelle mindestens ein Mitglied ist ausgewählt aus Orthophosphorsäure, Dihydrogenmonokaliumphosphat, Monohydrogendikaliumphosphat, Dihydrogenmononatriumphosphat, Monohydrogendinatriumphosphat, Trikaliumphosphat, und Trinatriumphosphat, insbesondere ausgewählt ist aus Orthophosphorsäure, Dihydrogenmonokaliumphosphat, Dihydrogenmononatriumphosphat, Trikaliumphosphat und Trinatriumphosphat, insbesondere ausgewählt ist aus Trikaliumphosphat und Trinatriumphosphat,
die Aluminiumquelle mindestens ein Mitglied ist ausgewählt aus Aluminiumsulfat, Aluminiumnitrat, Aluminiumchlorid, Aluminiumhydroxid, Aluminiumoxid, Aluminiumalkoxid, Natriumaluminat und Kaliumaluminat insbesondere aus Aluminiumsulfat, Aluminiumnitrat, Aluminiumchlorid, Aluminiumhydroxid, Aluminiumoxid, Natriumaluminat und Kaliumaluminat, insbesondere ausgewählt ist aus Natriumaluminat, Kaliumaluminat, Aluminiumsulfat und Aluminiumnitrat,
die Borquelle mindestens ein Mitglied ist ausgewählt aus Bornitrat, Borhydroxid, Natriumtetraborat und Borsäure, insbesondere ausgewählt ist aus Bornitrat und Borhydroxid, insbesondere ausgewählt ist aus Borhydroxid,
die Galliumquelle mindestens ein Mitglied ist ausgewählt aus Galliumnitrat, Galliumsulfat und Galliumhydroxid, insbesondere ausgewählt ist aus Galliumnitrat und Galliumsulfat, insbesondere ausgewählt ist aus Galliumsulfat,

die Kaliumquelle mindestens ein Mitglied ist ausgewählt aus Kaliumhydroxid, Kaliumcarbonat, Kaliumhydrogencarbonat, Kaliumnitrat, Kaliumsulfat, Kaliumchlorid, Kaliumbromid, Trikaliumphosphat, Dihydrogenmonokaliumphosphat und Monohydrogendikaliumphosphat, insbesondere ausgewählt ist aus Kaliumhydroxid, Kaliumcarbonat, Kaliumhydrogencarbonat, Kaliumnitrat, Kaliumsulfat, Kaliumchlorid und Kaliumbromid, vorzugsweise ausgewählt ist aus Kaliumhydroxid, Kaliumcarbonat, Kaliumhydrogencarbonat und Kaliumsulfat,
die Eisenquelle mindestens ein Mitglied ist ausgewählt aus Eisennitrat, Eisensulfat und Eisenchlorid insbesondere aus Eisensulfat und Eisenchlorid, vorzugsweise ausgewählt ist aus Eisensulfat, und die Indiumquelle mindestens ein Mitglied ist ausgewählt aus Indiumnitrat und Indiumsulfat, insbesondere ausgewählt ist aus Indiumsulfat.

6. Verfahren gemäß einem der Ansprüche 1 bis 5, worin die Lösung 1 eine Siliziumquelle, ausgewählt aus Natriumsilikat, Kaliumsilikat, Siliziumdioxid und/oder Fällungskieselsäure umfasst und die Lösung 2 eine Aluminiumquelle, ausgewählt aus Natriumaluminat, Kaliumaluminat, Aluminiumsulfat und/oder Aluminiumnitrat umfasst.

7. Verfahren gemäß einem der Ansprüche 1 bis 6, worin die basische Lösung 3 Kaliumhydroxid, Natriumhydroxid und/oder Ammoniumhydroxid, insbesondere Kaliumhydroxid und/oder Natriumhydroxid, gelöst in Wasser oder einem Wasser-Alkohol-Gemisch, umfasst, und/oder wobei die mindestens eine weitere Lösung mindestens ein Alkalisalz, ein Erdalkalisalz und/oder ein Ammoniumsalz, insbesondere eines oder mehrere von Kaliumcarbonat, Natriumcarbonat, Ammoniumcarbonat, Bariumhydroxid, Magnesiumhydroxid, Calciumhydroxid, oder Strontiumhydroxid, gelöst in Wasser oder einem Wasser-Alkohol-Gemisch, umfasst.

8. Verfahren gemäß einem der Ansprüche 1 bis 7, wobei der in Schritt (2) erhaltene Niederschlag durch Ionenaustausch in wässriger Lösung mit mindestens einem der folgenden Kationen modifiziert wird:
$Li^+$, $Na^+$, $K^+$, $Cs^+$, $Rb^+$, $NH_4^+$, $Be^{2+}$, $Mg^{2+}$, $Ca^{2+}$, $Sr^{2+}$ und/oder $Ba^{2+}$, insbesondere mit $Na^+$, $K^+$, $NH_4^+$, $Ca^{2+}$, und/oder $Ba^{2+}$.

9. Synthesegel, erhältlich durch ein Verfahren gemäß einem der Ansprüche 1 bis 8, wobei die Stoffmengen den folgenden Bedingungen genügen:

$K^1_2O/SiO_2$ 0,10 - 0,15 und
$K^{Gesamt}_2O/SiO_2 = 0,35 - 0,50$,

wobei $K^1$ Kalium im Synthesegel ist, das aus Kaliumhydroxid in Lösung 4 stammt und $K^{Gesamt}$ die Summe der Kaliumspezies im Synthesegel ist.

10. Synthesegel gemäß Anspruch 9, wobei die Stoffmengen den folgenden Bedingungen genügen:

| | |
|---|---|
| $(M_2O+NO)/SiO_2$ | 0,15 - 1,0 |
| $K^+/SiO_2$ | 0,2 - 2,0 |
| $H_2O/SiO_2$ | 5,0 - 30,0 |
| $SiO_2/Al_2O_3$ | 3,0 - 20,0, |

wobei M ausgewählt ist aus Li, Na, K und $NH_4$, und N ausgewählt ist aus Ba, Ca und Sr.

11. Synthesegel gemäß Anspruch 10, worin das Stoffmengenverhältnis von $SiO_2$ zu $Al_2O_3$ im Bereich von 7,0 bis 10,0 ist.

12. Verfahren zur Herstellung eines Aluminiumsilikats vom Strukturtyp LTL umfassend Aussetzen des Synthesegels gemäß einem der Ansprüche 9 bis 11 einer hydrothermalen Behandlung.

**Claims**

1. Process for producing a synthesis gel, comprising:

   (1) mixing a solution 1, a solution 2, and optionally at least one further solution with a basic solution 3 to obtain a precipitate,
   (2) removing the precipitate to obtain a mixed hydroxide, and optionally washing and drying the mixed hydroxide, and

(3) dissolving or suspending the mixed hydroxide in a basic solution 4 to obtain a synthesis gel,

wherein
solution 1 comprises a silicon source and optionally a titanium source, a germanium source, a tin source and/or a phosphorus source in water or a water/alcohol mixture,
solution 2 comprises an aluminium source and optionally a boron source, a gallium source, an indium source and/or a phosphorus source in water or a water/alcohol mixture,
the molar amounts of the compounds used in solutions 1 and 2, in the optional further solution(s) and in the basic solution 3 satisfy equation (1):

$$1 < \frac{\sum nBa - \sum nSr}{n_{Al}} \qquad (1)$$

where:

$\sum nBa$: denotes the sum total of the molar amounts of the bases $Ba$ used with a $pK_B$ of $< 8$, each multiplied by the number n of protolysis stages with a $pK_B$ of $< 8$,
$\sum nSr$: denotes the sum total of the molar amounts of the acids $Sr$ used with a $pK_A$ of $< 4.5$, each multiplied by the number $n$ of protolysis stages with a $pK_A$ of $< 4.5$,
$n_{Al}$: denotes the sum total of the molar amounts of aluminum used,

and the basic solution 4 comprises potassium hydroxide and potassium carbonate dissolved in water or a water/alcohol mixture, and in which the molar amounts of potassium hydroxide and potassium carbonate are chosen such that the molar ratio of $K^1_2O$ to $SiO_2$ in the synthesis gel is in the range from 0.10 to 0.15 and the molar ratio of $K^{total}_2O$ to $SiO_2$ in the synthesis gel is in the range from 0.35 to 0.50, where $K^1$ is potassium in the synthesis gel that originates from potassium hydroxide in solution 4, and $K^{total}$ is the sum total of the potassium species in the synthesis gel.

2. Process according to Claim 1, wherein $\sum nBa$ denotes the sum total of the molar amounts of the bases $Ba$ used with a $pK_B$ of $< 5$, each multiplied by the number n of protolysis stages with a $pK_B$ of $< 5$.

3. Process according to Claim 1 or 2, wherein the molar amounts of the compounds used in solutions 1 and 2, in the optional further solution (s) and in the basic solution 3 satisfy equation (1a):

$$1 < \frac{\sum nBa - \sum nSr}{n_{Al}} < 5 \qquad (1a).$$

4. Process according to Claim 1, 2 or 3, wherein solution 1 comprises a silicon source and a phosphorus source, preferably a silicon source, a titanium source and a phosphorus source, and/or wherein solution 2 comprises an aluminium source and a phosphorus source, preferably an aluminium source, a gallium source and a phosphorus source.

5. Process according to any of Claims 1 to 4, wherein
the silicon source is at least one member selected from sodium silicate, potassium silicate, silicon dioxide, silica, such as precipitated silica or fumed silica, and an alkoxysilane such as tetra-$C_{1-2}$-alkoxysilane, especially selected from sodium silicate, potassium silicate, silicon dioxide, precipitated silica and fumed silica, preferably selected from sodium silicate and potassium silicate,
the titanium source is at least one member selected from titanium sulfate, titanium tetrachloride and titanium dioxide, especially selected from titanium sulfate and titanium tetrachloride, preferably selected from titanium sulfate,
the germanium source is at least one member selected from germanium chloride and germanium hydroxide, especially selected from germanium chloride,
the tin source is at least one member selected from tin chloride, tin nitrate, tin sulfate and tin hydroxide, especially selected from tin chloride, tin nitrate and tin sulfate, preferably selected from tin sulfate,
the phosphorus source is at least one member selected from orthophosphoric acid, dihydrogen monopotassium phosphate, monohydrogen dipotassium phosphate, dihydrogen monosodium phosphate, monohydrogen disodium phosphate, tripotassium phosphate, and trisodium phosphate, especially selected from orthophosphoric acid, dihydrogen monopotassium phosphate, dihydrogen monosodium phosphate, tripotassium phosphate and trisodium phosphate, especially selected from tripotassium phosphate and trisodium phosphate,

the aluminium source is at least one member selected from aluminium sulfate, aluminium nitrate, aluminium chloride, aluminium hydroxide, aluminium oxide, aluminium alkoxide, sodium aluminate and potassium aluminate, especially from aluminium sulfate, aluminium nitrate, aluminium chloride, aluminium hydroxide, aluminium oxide, sodium aluminate and potassium aluminate, especially selected from sodium aluminate, potassium aluminate, aluminium sulfate and aluminium nitrate,

the boron source is at least one member selected from boron nitrate, boron hydroxide, sodium tetraborate and boric acid, especially selected from boron nitrate and boron hydroxide, especially selected from boron hydroxide,

the gallium source is at least one member selected from gallium nitrate, gallium sulfate and gallium hydroxide, especially selected from gallium nitrate and gallium sulfate, especially selected from gallium sulfate,

the potassium source is at least one member selected from potassium hydroxide, potassium carbonate, potassium hydrogencarbonate, potassium nitrate, potassium sulfate, potassium chloride, potassium bromide, tripotassium phosphate, dihydrogen monopotassium phosphate and monohydrogen dipotassium phosphate, especially selected from potassium hydroxide, potassium carbonate, potassium hydrogencarbonate, potassium nitrate, potassium sulfate, potassium chloride and potassium bromide, preferably selected from potassium hydroxide, potassium carbonate, potassium hydrogencarbonate and potassium sulfate,

the iron source is at least one member selected from iron nitrate, iron sulfate and iron chloride, especially from iron sulfate and iron chloride, preferably selected from iron sulfate, and

the indium source is at least one member selected from indium nitrate and indium sulfate, especially selected from indium sulfate.

6. Process according to any of Claims 1 to 5, in which solution 1 comprises a silicon source selected from sodium silicate, potassium silicate, silicon dioxide and/or precipitated silica, and solution 2 comprises an aluminium source selected from sodium aluminate, potassium aluminate, aluminium sulfate and/or aluminium nitrate.

7. Process according to any of Claims 1 to 6, in which the basic solution 3 comprises potassium hydroxide, sodium hydroxide and/or ammonium hydroxide, especially potassium hydroxide and/or sodium hydroxide, dissolved in water or a water/alcohol mixture, and/or wherein the at least one further solution comprises at least one alkali metal salt, one alkaline earth metal salt and/or one ammonium salt, especially one or more of potassium carbonate, sodium carbonate, ammonium carbonate, barium hydroxide, magnesium hydroxide, calcium hydroxide and strontium hydroxide, dissolved in water or a water/alcohol mixture.

8. Process according to any of Claims 1 to 7, wherein the precipitate obtained in step (2) is modified by ion exchange in aqueous solution with at least one of the following cations:
$Li^+$, $Na^+$, $K^+$, $Cs^+$, $Rb^+$, $NH_4^+$, $Be^{2+}$, $Mg^{2+}$, $Ca^{2+}$, $Sr^{2+}$ and/or $Ba^{2+}$, especially with $Na^+$, $K^+$, $NH_4^+$, $Ca^{2+}$, and/or $Ba^{2+}$.

9. Synthesis gel obtainable by a process according to any of Claims 1 to 8, wherein the molar amounts satisfy the following conditions:

$K^1{}_2O/SiO_2$ 0.10-0.15 and
$K^{total}{}_2O/SiO_2$ = 0.35-0.50,

where $K^1$ is potassium in the synthesis gel that originates from potassium hydroxide in solution 4 and $K^{total}$ is the sum total of the potassium species in the synthesis gel.

10. Synthesis gel according to Claim 9, wherein the molar amounts satisfy the following conditions:

| | |
|---|---|
| $(M_2O + NO)/SiO_2$ | 0.15-1.0 |
| $K^+/SiO_2$ | 0.2-2.0 |
| $H_2O/SiO_2$ | 5.0-30.0 |
| $SiO_2/Al_2O_3$ | 3.0-20.0, |

where M is selected from Li, Na, K and $NH_4$, and N is selected from Ba, Ca and Sr.

11. Synthesis gel according to Claim 10, in which the molar ratio of $SiO_2$ to $Al_2O_3$ is in the range from 7.0 to 10.0.

**12.** Process for producing an aluminium silicate of the LTL structure type, comprising subjecting the synthesis gel according to any of Claims 9 to 11 to a hydrothermal treatment.

**Revendications**

**1.** Procédé de fabrication d'un gel de synthèse comprenant :

(1) le mélange d'une solution 1, d'une solution 2 et éventuellement d'au moins une solution supplémentaire avec une solution basique 3 pour obtenir un précipité,
(2) la séparation du précipité pour obtenir un hydroxyde mixte et éventuellement le lavage et le séchage de l'hydroxyde mixte, et
(3) la dissolution ou la suspension de l'hydroxyde mixte dans une solution basique 4 pour obtenir un gel de synthèse,

la solution 1 comprenant une source de silicium et éventuellement une source de titane, une source de germanium, une source d'étain et/ou une source de phosphore, dans de l'eau ou un mélange eau-alcool,
la solution 2 comprenant une source d'aluminium et éventuellement une source de bore, une source de gallium, une source d'indium et/ou une source de phosphore, dans de l'eau ou un mélange eau-alcool,
les quantités de matière des composés utilisés dans les solutions 1 et 2, la ou les solutions supplémentaires éventuelles et la solution basique 3 satisfaisant l'équation (1) :

$$1 < \frac{\sum nBa - \sum nSr}{n_{Al}} \qquad (1)$$

dans laquelle :

$\sum nBa$ : signifie la somme des quantités de matière des bases $Ba$ utilisées ayant un $pK_B < 8$ à chaque fois multipliée par le nombre n d'étapes de protolyse avec un $pK_B < 8$,
$\sum nSr$ : signifie la somme des quantités de matière des acides $Sr$ utilisés ayant un $pKs < 4,5$ à chaque fois multipliée par le nombre n d'étapes de protolyse avec un $pKs < 4,5$,
$n_{Al}$ : signifie la somme des quantités de matière d'aluminium utilisé,
et la solution basique 4 comprenant de l'hydroxyde de potassium et du carbonate de potassium, dissous dans de l'eau ou un mélange eau-alcool, et les quantités de matière d'hydroxyde de potassium et de carbonate de potassium étant choisies de telle sorte que le rapport entre les quantités de matière de $K^1_2O$ et $SiO_2$ dans le gel de synthèse se situe dans la plage allant de 0,10 à 0,15, et le rapport entre les quantités de matière de $K^{total}_2O$ et $SiO_2$ dans le gel de synthèse se situe dans la plage allant de 0,35 à 0,50, $K^1$ étant le potassium dans le gel de synthèse qui provient d'hydroxyde de potassium dans la solution 4, et $K^{total}$ étant la somme des espèces potassium dans le gel de synthèse.

**2.** Procédé selon la revendication 1, dans lequel $\sum nBa$ signifie la somme des quantités de matière des bases $Ba$ utilisées ayant un $pK_B < 5$ à chaque fois multipliée par le nombre n d'étapes de protolyse avec un $pK_B < 5$.

**3.** Procédé selon la revendication 1 ou 2, dans lequel les quantités de matière des composés utilisés dans les solutions 1 et 2, la ou les solutions supplémentaires éventuelles et la solution basique 3 satisfont l'équation (la) :

$$1 < \frac{\sum nBa - \sum nSr}{n_{Al}} < 5 \qquad (1a).$$

**4.** Procédé selon la revendication 1, 2 ou 3, dans lequel la solution 1 comprend une source de silicium et une source de phosphore, de préférence une source de silicium, une source de titane et une source de phosphore, et/ou dans lequel la solution 2 comprend une source d'aluminium et une source de phosphore, de préférence une source d'aluminium, une source de gallium et une source de phosphore.

**EP 2 603 457 B1**

5. Procédé selon l'une quelconque des revendications 1 à 4, dans lequel la source de silicium d'au moins un élément est choisie parmi le silicate de sodium, le silicate de potassium, le dioxyde de silicium, la silice, telle que la silice précipitée ou la silice pyrogénée, et un alcoxysilane, tel que le tétra-alcoxysilane en $C_{1-2}$, notamment choisie parmi le silicate de sodium, le silicate de potassium, le dioxyde de silicium, la silice précipitée et la silice pyrogénée, de préférence choisie parmi le silicate de sodium et le silicate de potassium, la source de titane d'au moins un élément est choisie parmi le sulfate de titane, le tétrachlorure de titane et le dioxyde de titane, notamment choisie parmi le sulfate de titane et le tétrachlorure de titane, de préférence choisie parmi le sulfate de titane,
la source de germanium d'au moins un élément est choisie parmi le chlorure de germanium et l'hydroxyde de germanium, notamment choisie parmi le chlorure de germanium,
la source d'étain d'au moins un élément est choisie parmi le chlorure d'étain, le nitrate d'étain, le sulfate d'étain et l'hydroxyde d'étain, notamment choisie parmi le chlorure d'étain, le nitrate d'étain et le sulfate d'étain, de préférence choisie parmi le sulfate d'étain, la source de phosphore d'au moins un élément est choisie parmi l'acide orthophosphorique, le phosphate de dihydrogénomonopotassium, le phosphate de monohydrogénodipotassium, le phosphate de dihydrogénomonosodium, le phosphate de monohydrogénodisodium, le phosphate de tripotassium et le phosphate de trisodium, notamment choisie parmi l'acide orthophosphorique, le phosphate de dihydrogénomonopotassium, le phosphate de dihydrogénomonosodium, le phosphate de tripotassium et le phosphate de trisodium, notamment choisie parmi le phosphate de tripotassium et le phosphate de trisodium, la source d'aluminium d'au moins un élément est choisie parmi le sulfate d'aluminium, le nitrate d'aluminium, le chlorure d'aluminium, l'hydroxyde d'aluminium, l'oxyde d'aluminium, l'alcoxyde d'aluminium, l'aluminate de sodium et l'aluminate de potassium, notamment parmi le sulfate d'aluminium, le nitrate d'aluminium, le chlorure d'aluminium, l'hydroxyde d'aluminium, l'oxyde d'aluminium, l'aluminate de sodium et l'aluminate de potassium, notamment choisie parmi l'aluminate de sodium, l'aluminate de potassium, le sulfate d'aluminium et le nitrate d'aluminium,
la source de bore d'au moins un élément est choisie parmi le nitrate de bore, l'hydroxyde de bore, le tétraborate de sodium et l'acide borique, notamment choisie parmi le nitrate de bore et l'hydroxyde de bore, notamment choisie parmi l'hydroxyde de bore,
la source de gallium d'au moins un élément est choisie parmi le nitrate de gallium, le sulfate de gallium et l'hydroxyde de gallium, notamment choisie parmi le nitrate de gallium et le sulfate de gallium, notamment choisie parmi le sulfate de gallium,
la source de potassium d'au moins un élément est choisie parmi l'hydroxyde de potassium, le carbonate de potassium, l'hydrogénocarbonate de potassium, le nitrate de potassium, le sulfate de potassium, le chlorure de potassium, le bromure de potassium, le phosphate de tripotassium, le phosphate de dihydrogénomonopotassium et le phosphate de monohydrogénodipotassium, notamment choisie parmi l'hydroxyde de potassium, le carbonate de potassium, l'hydrogénocarbonate de potassium, le nitrate de potassium, le sulfate de potassium, le chlorure de potassium et le bromure de potassium, de préférence choisie parmi l'hydroxyde de potassium, le carbonate de potassium, l'hydrogénocarbonate de potassium et le sulfate de potassium,
la source de fer d'au moins un élément est choisie parmi le nitrate de fer, le sulfate de fer et le chlorure de fer, notamment parmi le sulfate de fer et le chlorure de fer, de préférence choisie parmi le sulfate de fer, et la source d'indium d'au moins un élément est choisie parmi le nitrate d'indium et le sulfate d'indium, notamment choisie parmi le sulfate d'indium.

6. Procédé selon l'une quelconque des revendications 1 à 5, dans lequel la solution 1 comprend une source de silicium, choisie parmi le silicate de sodium, le silicate de potassium, le dioxyde de silicium et/ou la silice précipitée, et la solution 2 comprend une source d'aluminium, choisie parmi l'aluminate de sodium, l'aluminate de potassium, le sulfate d'aluminium et/ou le nitrate d'aluminium.

7. Procédé selon l'une quelconque des revendications 1 à 6, dans lequel la solution basique 3 comprend de l'hydroxyde de potassium, de l'hydroxyde de sodium et/ou de l'hydroxyde d'ammonium, notamment de l'hydroxyde de potassium et/ou de l'hydroxyde de sodium, dissous dans de l'eau ou un mélange eau-alcool, et/ou dans lequel ladite au moins une solution supplémentaire comprend au moins un sel alcalin, un sel alcalino-terreux et/ou un sel d'ammonium, notamment un ou plusieurs parmi le carbonate de potassium, le carbonate de sodium, le carbonate d'ammonium, l'hydroxyde de baryum, l'hydroxyde de magnésium, l'hydroxyde de calcium ou l'hydroxyde de strontium, dissous dans de l'eau ou un mélange eau-alcool.

8. Procédé selon l'une quelconque des revendications 1 à 7, dans lequel le précipité obtenu à l'étape (2) est modifié par échange d'ions dans une solution aqueuse avec au moins un des cations suivants :
$Li^+$, $Na^+$, $K^+$, $Cs^+$, $Rb^+$, $NH_4^+$, $Be^{2+}$, $Mg^{2+}$, $Ca^{2+}$, $Sr^{2+}$ et/ou $Ba^{2+}$, notamment $Na^+$, $K^+$, $NH_4^+$, $Ca^{2+}$ et/ou $Ba^{2+}$.

9. Gel de synthèse, pouvant être obtenu par un procédé selon l'une quelconque des revendications 1 à 8, dans lequel les quantités de matière satisfont les conditions suivantes :

$K^1{}_2O/SiO_2 = 0,10$ à $0,15$ et
$K^{total}{}_2O/SiO_2 = 0,35$ à $0,50$,
$K^1$ étant le potassium dans le gel de synthèse qui provient d'hydroxyde de potassium dans la solution 4, et $K^{total}$ étant la somme des espèces potassium dans le gel de synthèse.

10. Gel de synthèse selon la revendication 9, dans lequel les quantités de matière satisfont les conditions suivantes :

$(M_2O+NO)/SiO_2 = 0,15$ à $1,0$,
$K^+/SiO_2 = 0,2$ à $2,0$,
$H_2O/SiO_2 = 5,0$ à $30,0$,
$SiO_2/Al_2O_3 = 3,0$ à $20,0$,
M étant choisi parmi Li, Na, K et $NH_4$, et N étant choisi parmi Ba, Ca et Sr.

11. Gel de synthèse selon la revendication 10, dans lequel le rapport entre les quantités de matière de $SiO_2$ et $Al_2O_3$ se situe dans la plage allant de $7,0$ à $10,0$.

12. Procédé de fabrication d'un silicate d'aluminium de type structural LTL comprenant l'exposition du gel de synthèse selon l'une quelconque des revendications 9 à 11 à un traitement hydrothermal.

Figur 1

Figur 2

Ex-9457-9    1µm    EHT = 1.50 kV    Signal A = SE2    Date :4 Feb 2010
WD = 4 mm    Photo No. = 9434    Time :15:04:49

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3216789 A
- US 5242675 A
- US 4657749 A
- US 4530824 A
- EP 0109199 A1

**In der Beschreibung aufgeführte Nicht-Patentliteratur**

- Hydrothermalsynthese ausgewählter Zeolithe und ihre Charakterisierung durch Adsorption. **R.A. RAKOCZY.** Dissertation. Universität Stuttgart, 2004
- **C. BAERLOCHER ; W.M. MEIER ; D.H. OLSON.** Atlas of Zeolite Framework Types. Elsevier, 2001, 170
- **H.G. KARGE et al.** Zeolite and related Microporous Materials: Studies in Surface Science and Catalysis. 1994, vol. 84, 1805-1812